# EUROPEAN PATENT APPLICATION

(11) **EP 3 820 077 A1**
(43) Date of publication of application: **12.05.2021**
(21) Application number: 18932382.7
(22) Date of filing: 03.09.2018
(51) Int. Cl.: H04L 9/32

(54) **LOGIN METHOD, TOKEN SENDING METHOD, AND DEVICE**

(71) Applicant: HUAWEI TECHNOLOGIES CO., LTD., Shenzhen, Guangdong 518129 (CN)
(72) Inventor: FANG, Xiwen, Shenzhen, Guangdong 518129 (CN); WANG, Anyu, Shenzhen, Guangdong 518129 (CN); HU, Donghua, Shenzhen, Guangdong 518129 (CN)
(74) Representative: Grünecker Patent- und Rechtsanwälte PartG mbB
(86) International application number: PCT/CN2018/103817
(87) International publication number: WO 2020/047710

(57) **Abstract**

Embodiments of this application provide a login method, a token sending method, and a device, and relate to the field of communications technologies, so that a user can quickly log in to an application server without entering a login account and a password, thereby reducing entering operations of the user. A specific solution is as follows: A first terminal sends login request information to an application server of a first application. The login request information includes a login account and a password for logging in to the application server. The first terminal receives a first token that is sent by the application server and that allows login to the application server. The first terminal sends the first token to a second terminal, so that the second terminal automatically logs in to the application server by using the first token. The embodiments of this application are used in a login process.

## Description

### TECHNICAL FIELD

This application relates to the field of communications technologies, and in particular, to a token sending method, a login method, and a device.

### BACKGROUND

With development of an intelligent terminal such as a mobile phone, the terminal has an increasingly strong capability, and the terminal can provide increasing services for a user by using installed applications.

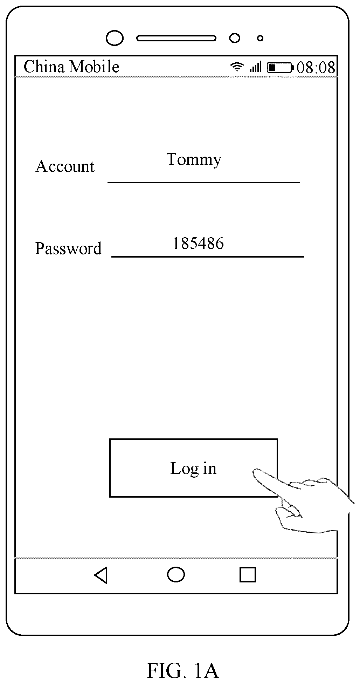

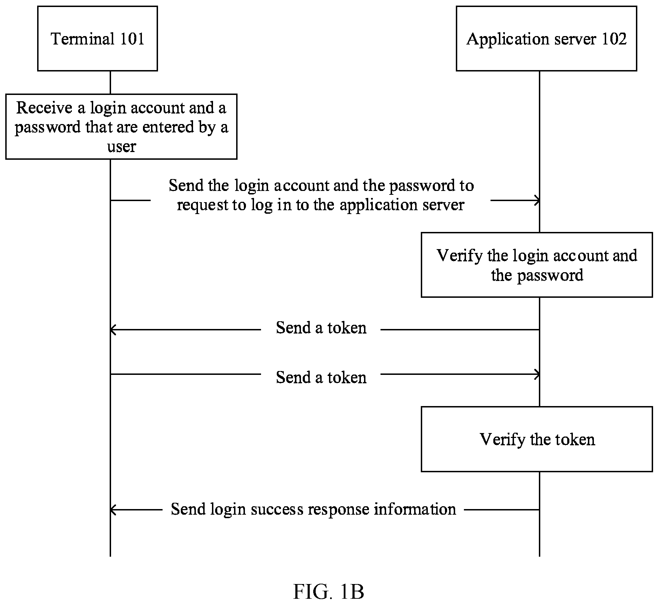

In the prior art, when the user logs in to an application server of an application through the terminal to use a service provided by the application, as shown in FIG. 1A, the user needs to enter a login account (for example, a user name or a mobile number) and a password that are used when the application is registered with. As shown in FIG. 1B, after receiving the login account and the password that are entered by the user, the terminal sends the login account and the password to the application server. After the login account and the password are verified, the application server issues a token (token) to the terminal for the current login account. The terminal establishes a connection to the application server based on a token request. After the token is successfully verified, the application server allows the terminal to log in to the application server and use the service provided by the application.

In the prior art, the user needs to enter the login account and the password to log in to the application server. Consequently, operations are relatively complex, and a login speed is relatively low.

### SUMMARY

Embodiments of this application provide a token sending method, a login method, and a device, so that a user can quickly log in to an application server without entering a login account and a password, thereby reducing entering operations of the user.

To achieve the foregoing objectives, the following technical solutions are used in the embodiments of this application:

According to one aspect, the technical solutions of this application provide a token sending method, including: A first terminal sends login request information to an application server of a first application, where the login request information includes a login account and a password for logging in to the application server; the first terminal then receives a first token that is sent by the application server and that allows login to the application server; and the first terminal sends the first token to a second terminal, so that the second terminal automatically logs in to the application server by using the first token.

In this solution, the first terminal may synchronize, with the second terminal, the first token obtained when the first terminal logs in to the application server of the first application, so that the second terminal directly requests, based on the first token, to log in to the application server, a user does not need to enter information such as a password on the second terminal, and in addition, the second terminal does not need to send the information such as the password to the application server. Therefore, entering operations of the user can be reduced, and the second terminal can quickly log in to the application server of the first application automatically.

In a possible implementation, that the first terminal sends the first token to a second terminal specifically includes: The first terminal informs a user that the first token is to be sent to the second terminal, and/or verifies user permission; and the first terminal sends the first token to the second terminal after user confirmation is obtained and/or the user permission is verified.

In another possible implementation, after the first terminal sends the first token to the second terminal, the method further includes: The first terminal receives first prompt information sent by the second terminal or the application server, where the first prompt information is used to indicate that the second terminal receives the first token and/or the second terminal is performing a login operation by using the first token; and the first terminal sends suspension information to the second terminal or the application server based on a user indication, so that the second terminal cannot log in to the application server by using the first token.

In this way, the user can control, by using the first terminal, the insecure second terminal not to log in to the application server based on the first token sent by the first terminal.

In another possible implementation, that the first terminal sends the first token to a second terminal includes: The first terminal sends a token of at least one application to the second terminal in response to an indication operation of the user, where the token of the at least one application includes the first token of the first application.

In other words, the first terminal may send, to the second terminal, a token of an application specified by the user.

In another possible implementation, before the first terminal sends the first token to the second terminal, the method further includes: The first terminal receives token request information sent by the second terminal, where the token request information is used to request a token of at least one application, and the at least one application includes the first application. That the first terminal sends the first token to a second terminal includes: The first terminal sends the token of the at least one application to the second terminal, where the token of the at least one application includes the first token.

In other words, the first terminal may send a requested token of an application to the second terminal based on a request of the second terminal.

In another possible implementation, before the first terminal sends the first token to a second terminal, the method further includes: The first terminal stores the first token through a preset storage interface, where the preset storage interface is used to store the token of the at least one application on the first terminal. That the first terminal sends the first token to the second terminal includes: The first terminal obtains the first token through a preset read interface, where the preset read interface is used to read the token of the at least one application on the first terminal; and the first terminal sends the first token to the second terminal.

When tokens of all applications are accessed through a same access interface, the first terminal may obtain a token of an application through a same storage interface, and send the obtained token to the second terminal.

In another possible implementation, that the first terminal stores the first token through a preset storage interface includes: The first terminal transfers the first token to the preset storage interface; the first terminal encrypts the first token based on a first key, where the first key is a hardware key, or the first key is a key that is randomly generated after the first terminal is powered on; and the first terminal stores the encrypted first token.

In this way, when the first terminal encrypts a token based on the hardware key or the key that is randomly generated after power-on, and then stores the token, another device cannot obtain the key used by the first terminal to encrypt the token, and therefore cannot obtain a plaintext token through decryption, thereby improving security of the token.

In another possible implementation, that the first terminal sends the first token to a second terminal includes: The first terminal sends the first token to the second terminal through at least one of a direct connection, a cloud server, a near field communication network, or an external mediation device.

That is, the first terminal may synchronize the token with the second terminal in a plurality of manners.

In another possible implementation, the first token is an activated token. The activated token is a token that is used when the first terminal is last connected to the first application server and that is in at least one token, stored in the first terminal, corresponding to at least one login account of the first application. The activated token is used by the second terminal to log in to the first application server of the first application.

In this way, the second terminal can log in to the application server based on the activated token, and the user does not need to manually select a token on the second terminal for login.

In another possible implementation, that the first terminal sends the first token to a second terminal includes: The first terminal sends the first token to the second terminal according to a preset synchronization policy. The preset synchronization policy includes: The first terminal periodically sends the first token to the second terminal; or after receiving an updated first token sent by the first application server, the first terminal sends the updated first token to the second terminal; or the first terminal sends the first token to the second terminal in response to an indication operation of the user; or the first terminal sends the first token to the second terminal in response to an operation of receiving token request information sent by the second terminal.

That is, the first terminal may send the token to the second terminal according to a plurality of different policies.

In another possible implementation, before the first terminal obtains the first token through a preset read interface, the method further includes: The first terminal stores an identifier of the first token, where the identifier is specified by the first application or is generated by the first terminal according to a preset algorithm. That the first terminal obtains the first token through a preset read interface includes: The first terminal obtains, through the preset read interface, the first token corresponding to the identifier. If the identifier is not specified by the first application, the method further includes: The first terminal returns the identifier to the first application.

In this way, the first terminal can obtain the token based on the identifier of the token.

In another possible implementation, the method further includes: The first terminal obtains the first token through the preset read interface based on the identifier; the first terminal sends connection request information to the first application server, where the connection request information includes the first token; and the first terminal receives connection response information sent by the first application server.

In this way, after obtaining the token based on the identifier of the token, the first terminal can use a service of the application based on the token.

According to another aspect, the technical solutions of this application provide a login method, the method may be applied to a second terminal, and the second terminal does not log in to an application server of a first application currently. The method includes: The second terminal receives a first token of the first application that is sent by a first terminal, where the first token is a credential that is sent by the application server to the first terminal and that allows login to the application server; the second terminal automatically sends login request information to the application server, where the login request information includes the first token; and the second terminal receives login success response information sent by the application server.

In this solution, the second terminal may directly request, based on the first token sent by the first terminal, to log in to the application server of the first application corresponding to the first token, the user does not need to enter information such as a password on the second terminal, and the second terminal does not need to send the information such as the password to the application server. Therefore, entering operations of the user can be reduced, and the second terminal can quickly log in to the application server of the first application automatically.

In a possible implementation, after the second terminal receives a first token of the first application that is sent by a first terminal, the method further includes: The second terminal sends second prompt information to the first terminal, where the second prompt information is used to indicate that the second terminal receives the first token; and if the second terminal receives suspension information sent by the first terminal or the application server, the second terminal displays a login interface in response to an operation of accessing the first application by a user.

In this way, the user can control, by using the first terminal, the insecure second terminal not to log in to the application server based on the first token sent by the first terminal.

In another possible implementation, after the second terminal automatically sends login request information to the application server, the method further includes: The second terminal sends third prompt information to the first terminal, where the third prompt information is used to indicate that the second terminal is performing a login operation by using the first token.

In this way, the user can learn, by using the first terminal, that the second terminal is currently performing a login operation by using the first token.

In another possible implementation, after the second terminal automatically sends login request information to the application server, the method further includes: The second terminal displays fourth prompt information, where the fourth prompt information indicates that the second terminal is performing a login operation by using the first token.

In this way, the user can learn, by using the second terminal, that the second terminal is currently performing a login operation by using the first token.

In another possible implementation, that the second terminal receives a first token of the first application that is sent by a first terminal includes: The second terminal receives an installation package, user data, and the first token of the first application that are sent by the first terminal. Before the second terminal automatically sends the login request information to the application server, the method further includes: The second terminal installs the first application based on the installation package of the first application.

In this way, the second terminal can install an application, log in to an application server, and maintain user data consistent with that on the first terminal based on an installation package, user data, and a token of the application that are obtained from the first terminal. This is equivalent to quickly cloning a login status and data information of the application to the second terminal.

In another possible implementation, before the second terminal receives a first token of the first application that is sent by a first terminal, the method further includes: The second terminal sends token request information to the first terminal, where the token request information is used to request a token of at least one application, and the at least one application includes the first application.

In this way, the first terminal can send a requested token of an application to the second terminal based on a request of the second terminal.

In another possible implementation, the first token is an activated token, and the activated token is a token used when the first terminal is last connected to the first application server.

In another possible implementation, the second terminal receives, through a direct connection, the first token of the first application that is sent by the first terminal.

According to another aspect, an embodiment of this application provides an electronic device, including: a processing unit, configured to: indicate to send login request information to an application server of a first application, where the login request information includes a login account and a password for logging in to the application server; and indicate to send a first token to another electronic device, where the first token is a credential that is received by the electronic device from the application server and that indicates to allow login to the application server; a sending unit, configured to send the login request information to the application server according to the indication of the processing unit; and a receiving unit, configured to receive the first token sent by the application server. The sending unit is further configured to send the first token to the another electronic device according to the indication of the processing unit, so that the another electronic device automatically logs in to the application server by using the first token.

In a possible implementation, the processing unit is further configured to: inform a user that the first token is to be sent to the another electronic device, and/or verify user permission; and the sending unit is specifically configured to send, by the electronic device, the first token to the another electronic device after user confirmation is obtained and/or the user permission is verified.

In another possible implementation, the receiving unit is further configured to: after the sending unit sends the first token to the another electronic device, receive first prompt information sent by the another electronic device or the application server, where the first prompt information is used to indicate that the another electronic device receives the first token and/or the another electronic device is performing a login operation by using the first token; and the sending unit is further configured to send suspension information to the another electronic device or the application server based on a user indication, so that the another electronic device cannot log in to the application server by using the first token.

In another possible implementation, the sending unit is specifically configured to send a token of at least one application to the another electronic device in response to an indication operation of the user, where the token of the at least one application includes the first token of the first application.

In another possible implementation, the receiving unit is further configured to: before the sending unit sends the first token to the another electronic device, receive token request information sent by the another electronic device, where the token request information is used to request a token of at least one application, and the at least one application includes the first application; and the sending unit is specifically configured to send the token of the at least one application to the another electronic device, where the token of the at least one application includes the first token.

In another possible implementation, the electronic device further includes a storage unit, configured to store the first token through a preset storage interface, where the preset storage interface is used to store the token of the at least one application on the electronic device, where the sending unit is specifically configured to obtain the first token through a preset read interface, where the preset read interface is used to read the token of the at least one application on the electronic device, and send the first token to the another electronic device.

In another possible implementation, the storage unit is specifically configured to: transfer the first token to the preset storage interface; encrypt the first token based on a first key, where the first key is a hardware key, or the first key is a key that is randomly generated after the electronic device is powered on; and store the encrypted first token.

In another possible implementation, the sending unit is specifically configured to send the first token to the another electronic device through at least one of a direct connection, a cloud server, a near field communication network, or an external mediation device.

According to another aspect, the technical solutions of this application provide an electronic device, the electronic device does not log in to an application server of a first application currently, and the electronic device includes: a processing unit, configured to: after a first token of the first application that is sent by another electronic device is received, indicate to send login request information to the application server of the first application, where the login request information includes the first token, and the first token is a credential that is sent by the application server to the first terminal and that allows login to the application server; a sending unit, configured to send the login request information to the application server according to the indication of the processing unit; and a receiving unit, configured to receive the first token, and receive login success response information sent by the application server.

In a possible implementation, the sending unit is further configured to send second prompt information to the another electronic device after the receiving unit receives the first token of the first application that is sent by the another electronic device, where the second prompt information is used to indicate that the electronic device receives the first token; and the electronic device further includes a first display unit, configured to: if the receiving unit receives suspension information sent by the another electronic device or the application server, display a login interface in response to an operation of accessing the first application by a user.

In a possible implementation, the sending unit is further configured to send third prompt information to the another electronic device after automatically sending the login request information to the application server, where the third prompt information is used to indicate that the electronic device is performing a login operation by using the first token.

In another possible implementation, the electronic device further includes a second display unit, configured to display fourth prompt information after the sending unit automatically sends the login request information to the application server, where the fourth prompt information indicates that the electronic device is performing a login operation by using the first token.

In another possible implementation, the receiving unit is specifically configured to receive an installation package, user data, and the first token of the first application that are sent by the another electronic device; and the electronic device further includes an installation unit, configured to: before the sending unit automatically sends the login request information to the application server, install the first application based on the installation package of the first application.

In another possible implementation, the sending unit is further configured to: before the receiving unit receives the first token of the first application that is sent by the another electronic device, send token request information to the another electronic device, where the token request information is used to request to obtain a token of at least one application, and the at least one application includes the first application.

According to another aspect, the technical solutions of this application provide a system. The system includes an application server, the first terminal in any possible implementation of any one of the foregoing aspects, and the second terminal in any possible implementation of any one of the foregoing aspects.

In a possible implementation, the first terminal is an old device, and the second terminal is a new device.

In another possible implementation, the first terminal and the second terminal are devices of a same vendor.

According to another aspect, the technical solutions of this application provide an electronic device, including one or more processors and one or more memories. The one or more memories are coupled to the one or more processors. The one or more memories are configured to store computer program code, and the computer program code includes a computer instruction. When the one or more processors execute the computer instruction, the electronic device is enabled to perform the token sending method according to any possible implementation of any one of the foregoing aspects.

According to another aspect, the technical solutions of this application provide a computer storage medium, including a computer instruction. When the computer instruction is run on an electronic device, the electronic device is enabled to perform the token sending method according to any possible implementation of any one of the foregoing aspects.

According to another aspect, the technical solutions of this application provide a computer program product. When the computer program product is run on an electronic device, the electronic device is enabled to perform the token sending method according to any possible implementation of any one of the foregoing aspects.

According to another aspect, the technical solutions of this application provide an electronic device, including one or more processors and one or more memories. The one or more memories are coupled to the one or more processors. The one or more memories are configured to store computer program code, and the computer program code includes a computer instruction. When the one or more processors execute the computer instruction, the electronic device is enabled to perform the login method according to any possible implementation of any one of the foregoing aspects.

According to another aspect, the technical solutions of this application provide a computer storage medium, including a computer instruction. When the computer instruction is run on an electronic device, the electronic device is enabled to perform the login method according to any possible implementation of any one of the foregoing aspects.

According to another aspect, the technical solutions of this application provide a computer program product. When the computer program product is run on an electronic device, the electronic device is enabled to perform the login method according to any possible implementation of any one of the foregoing aspects.

### BRIEF DESCRIPTION OF DRAWINGS

FIG. 1A is a schematic diagram of a login interface according to the prior art;
FIG. 1B is a flowchart of a login process according to the prior art;
FIG. 2 is a schematic diagram of a system architecture according to an embodiment of this application;
FIG. 3A is a schematic diagram of a hardware structure of a terminal according to an embodiment of this application;
FIG. 3B is a schematic diagram of a software structure of a terminal according to an embodiment of this application;
FIG. 4A is a schematic diagram of a login process according to an embodiment of this application;
FIG. 4B-1 and FIG. 4B-2 are schematic diagrams of a group of interfaces according to an embodiment of this application;

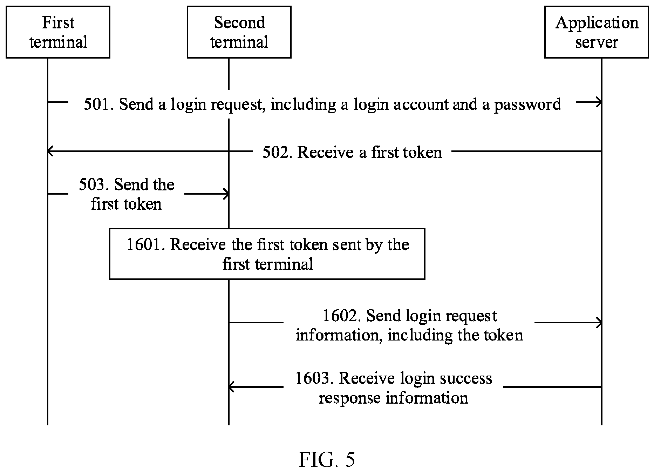

FIG. 5 is a flowchart of a login method according to an embodiment of this application;

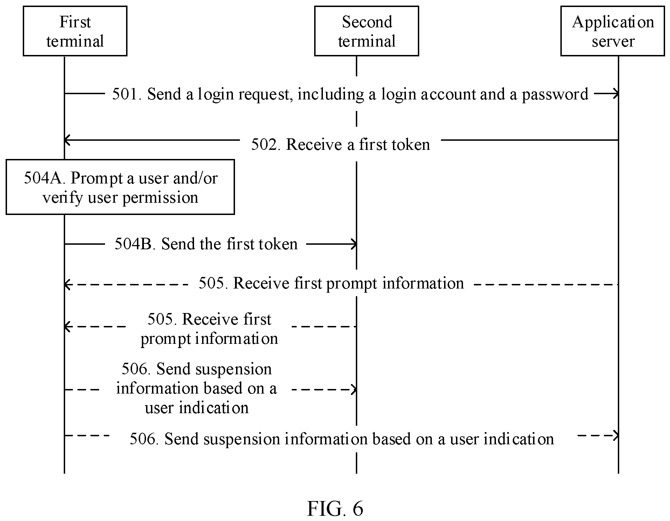

FIG. 6 is a flowchart of a token sending method according to an embodiment of this application;

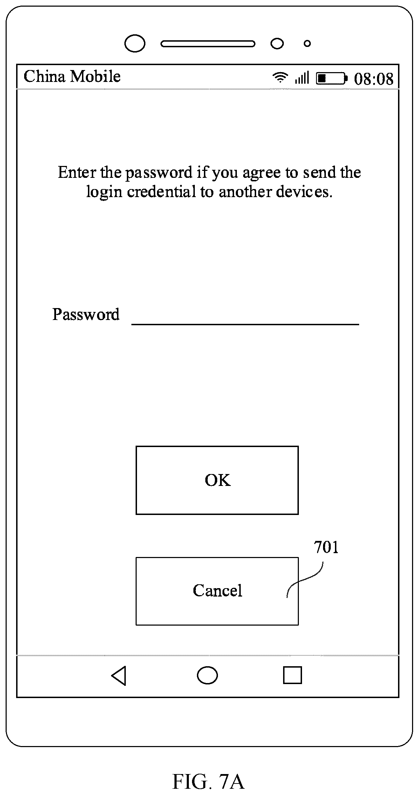

FIG. 7A to FIG. 7C are schematic diagrams of interfaces according to an embodiment of this application;

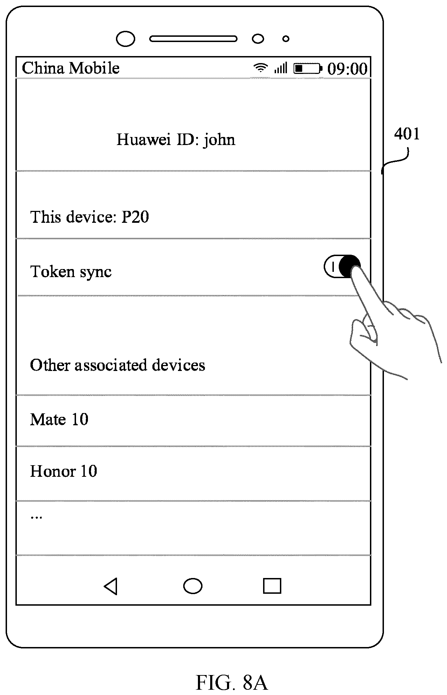

FIG. 8A is a schematic diagram of another interface according to an embodiment of this application;

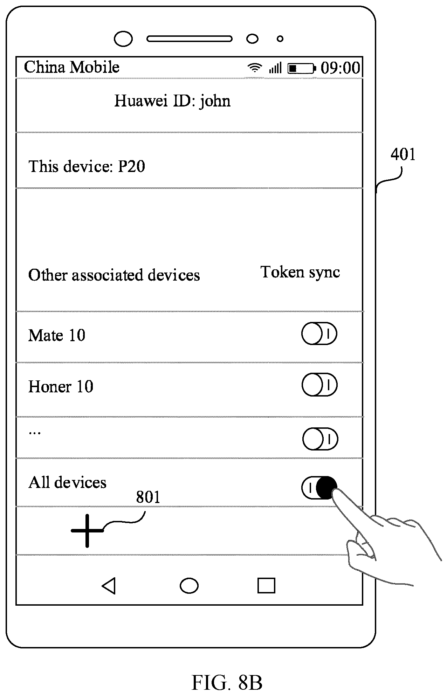

FIG. 8B is a schematic diagram of another interface according to an embodiment of this application;

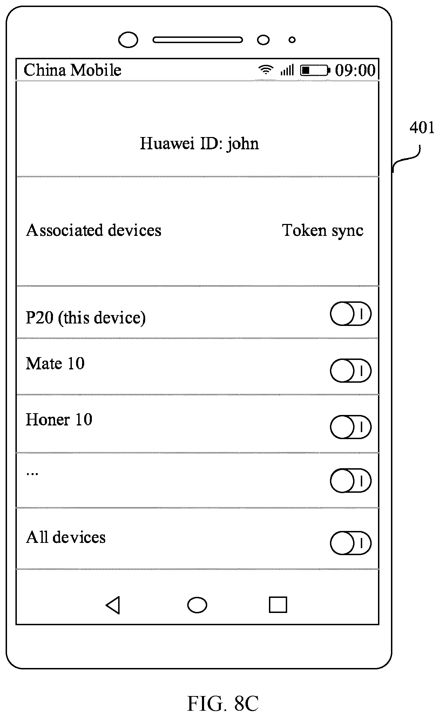

FIG. 8C is a schematic diagram of another interface according to an embodiment of this application;

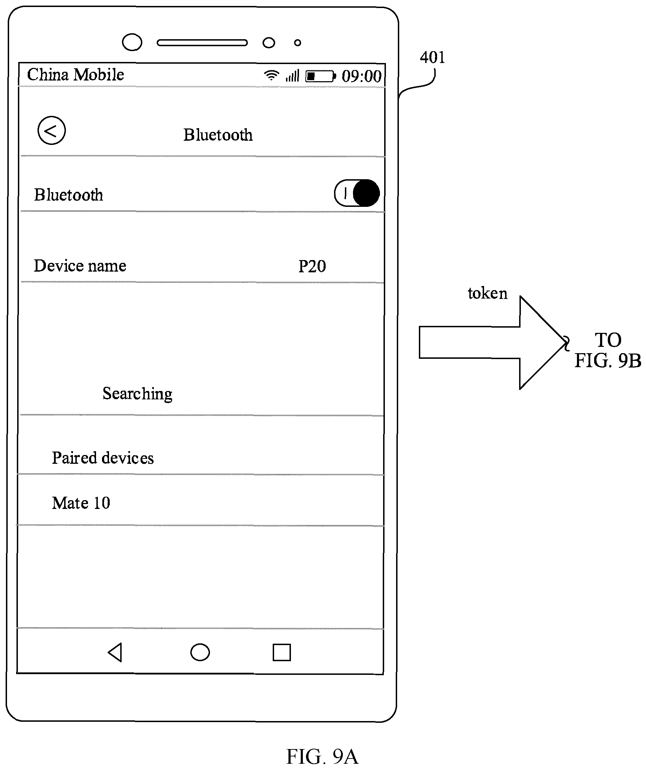

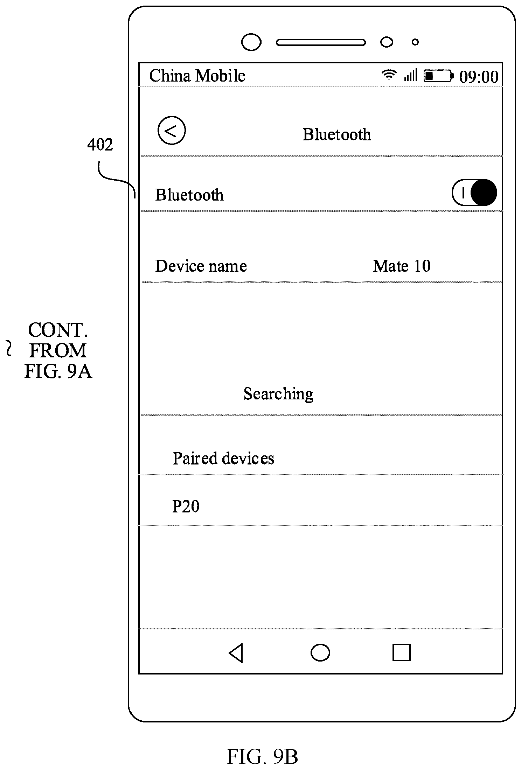

FIG. 9A and FIG. 9B are schematic diagrams of another group of interfaces according to an embodiment of this application;

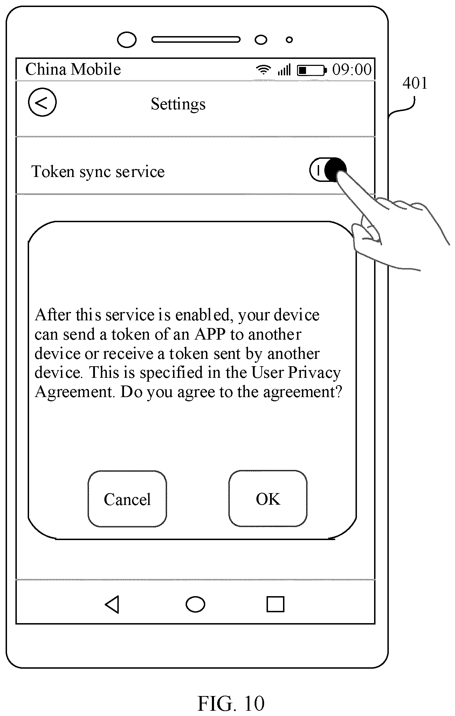

FIG. 10 is a schematic diagram of another interface according to an embodiment of this application;

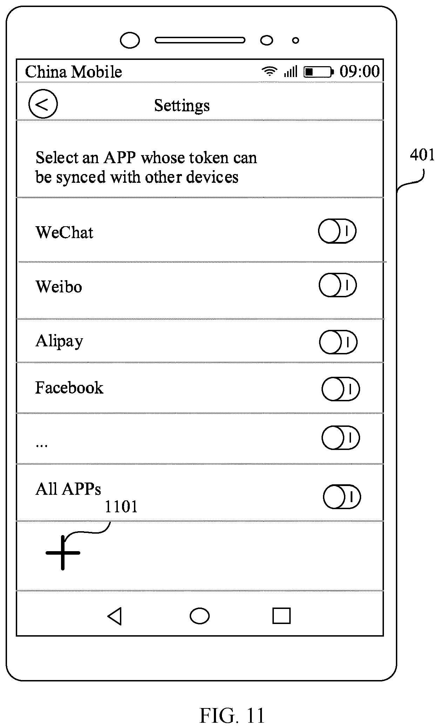

FIG. 11 is a schematic diagram of another interface according to an embodiment of this application;

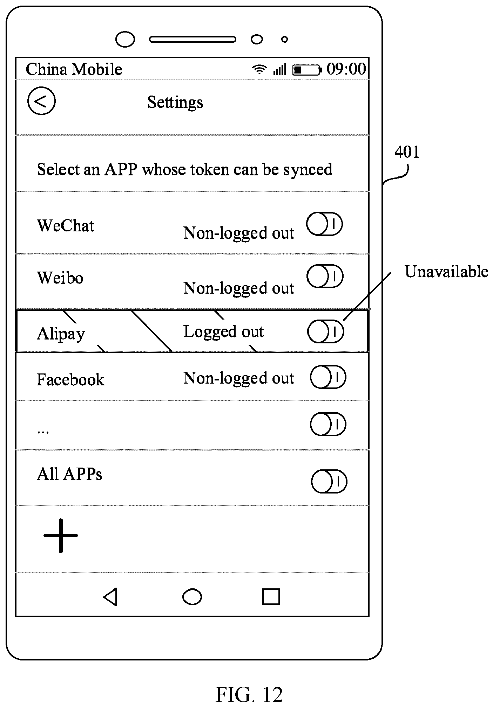

FIG. 12 is a schematic diagram of another interface according to an embodiment of this application;

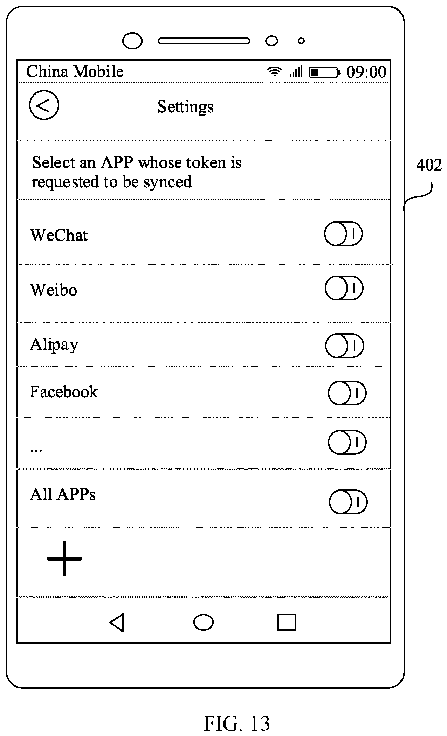

FIG. 13 is a schematic diagram of another interface according to an embodiment of this application;

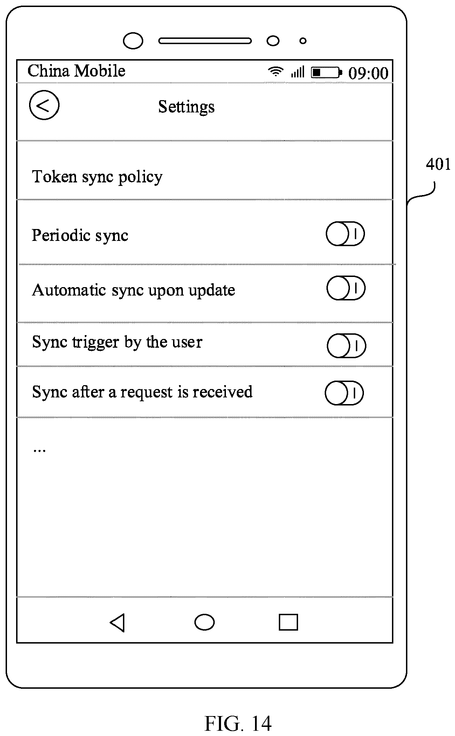

FIG. 14 is a schematic diagram of another interface according to an embodiment of this application;

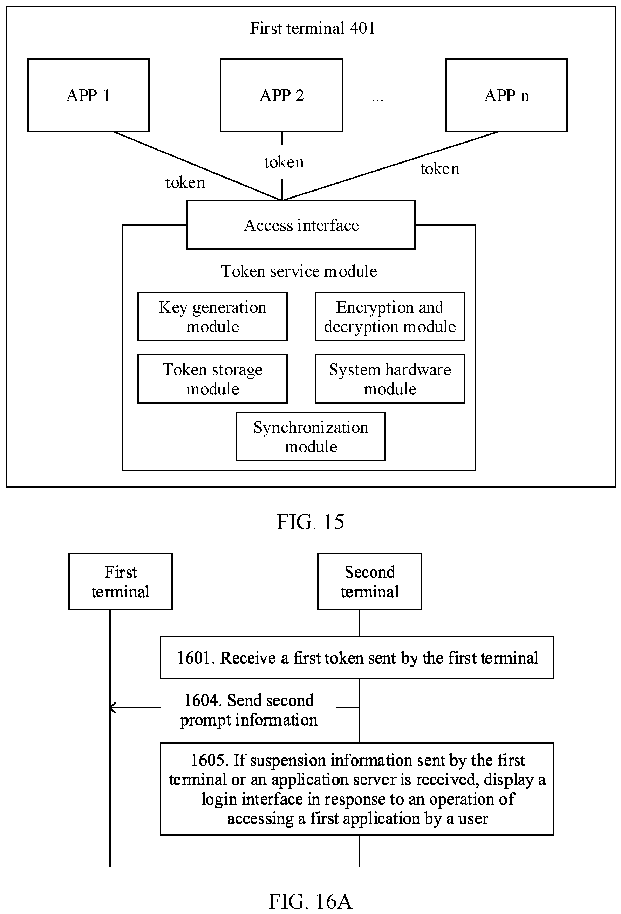

FIG. 15 is a schematic structural diagram of a first terminal according to an embodiment of this application;
FIG. 16A is a flowchart of another login method according to an embodiment of this application;

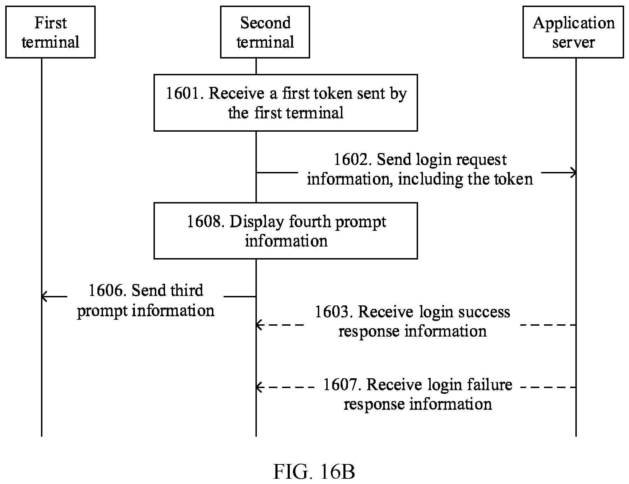

FIG. 16B is a flowchart of another login method according to an embodiment of this application;

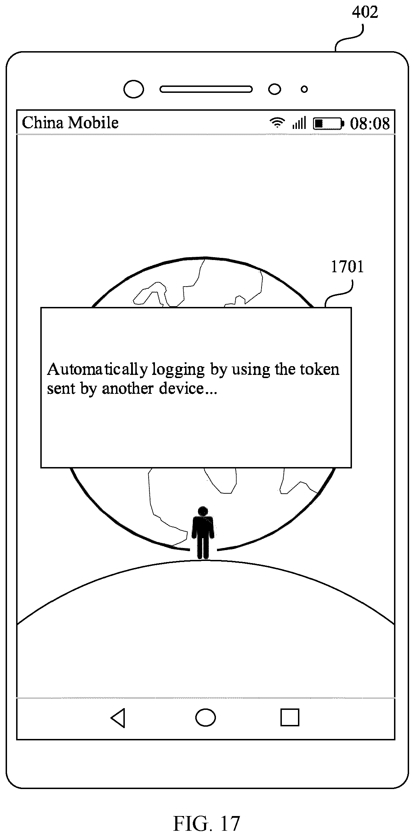

FIG. 17 is a schematic diagram of another interface according to an embodiment of this application;

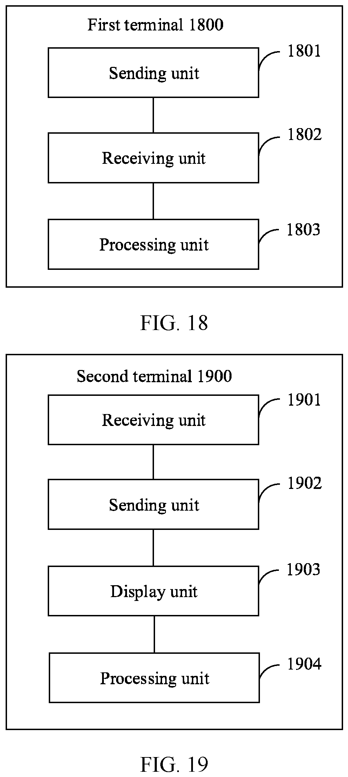

FIG. 18 is a schematic structural diagram of another first terminal according to an embodiment of this application; and
FIG. 19 is a schematic structural diagram of a second terminal according to an embodiment of this application.

### DESCRIPTION OF EMBODIMENTS

For ease of understanding, some concepts related to the embodiments of this application are provided as examples for reference. Details are as follows:
The following describes technical solutions in embodiments of this application with reference to accompanying drawings in the embodiments of this application. In descriptions of the embodiments of this application, "/" means "or" unless otherwise specified. For example, A/B may represent A or B. In this specification, "and/or" describes only an association for describing associated objects and represents that three relationships may exist. For example, A and/or B may represent the following three cases: Only A exists, both A and B exist, and only B exists. In addition, in the descriptions of the embodiments of this application, "a plurality of" means two or more.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the description of the embodiments of this application, unless otherwise stated, "a plurality of' means two or more than two.

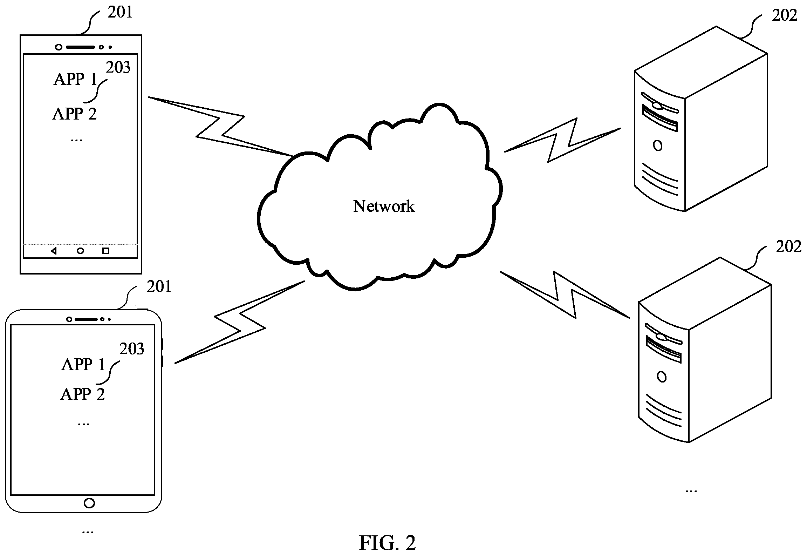

The embodiments of this application provide a token sending method and a login method, and the token sending method and the login method may be applied to a communications system 200 shown in FIG. 2. As shown in FIG. 2, the communications system 200 includes at least one terminal 201 and at least one application server 202. A plurality of applications (application, APP) 203 may be installed on a terminal 201, and each APP 203 may correspond to an application server 202. The application may be a native system application on the terminal 201 or may be a third-party application. After the user logs in to the application server 202 of the APP 203 by using the terminal 201, the application server 202 may provide a related service of the APP for the user.

For example, the terminal 201 may be a terminal such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal is not limited in this embodiment of this application.

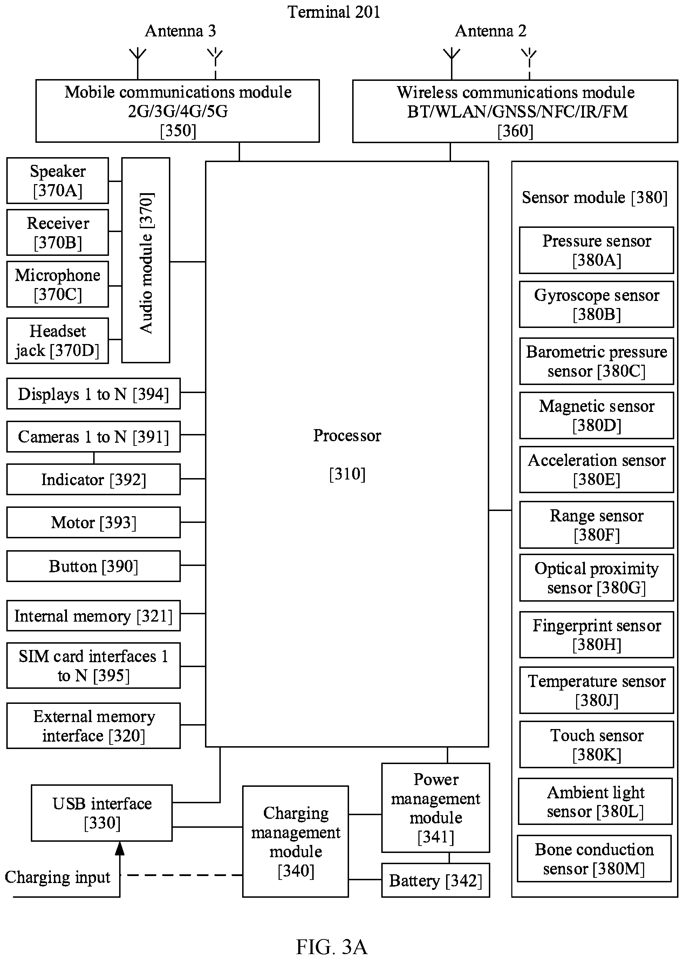

For example, FIG. 3A is a schematic structural diagram of the terminal 201. The terminal 201 may include a processor 310, an external memory interface 320, an internal memory 321, a universal serial bus (universal serial bus, USB) interface 330, a charging management module 330, a power management module 341, a battery 342, an antenna 1, an antenna 2, a mobile communications module 350, a wireless communications module 360, an audio module 370, a speaker 370A, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like. The sensor module 380 may include a pressure sensor 380A, a gyro sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It may be understood that the structure described in the embodiments does not constitute a specific limitation on the terminal 201. In some other embodiments, the terminal 201 may include more or fewer components than those shown in the figure, or some components may be combined, or some components may be split, or different component arrangements may be used. The components in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural processing unit (neural-network processing unit, NPU). Different processing units may be independent components, or may be integrated into one or more processors.

The controller may be a nerve center and a command center of the terminal 201. The controller may generate an operation control signal based on an instruction operation code and a time sequence signal, to complete control of instruction reading and instruction execution.

A memory may be further disposed in the processor 310, and is configured to store an instruction and data. In some embodiments, the memory in the processor 310 is a cache memory. The memory may store an instruction or data that is just used or cyclically used by the processor 310. If the processor 310 needs to use the instruction or the data again, the processor may directly invoke the instruction or the data from the memory, to avoid repeated access and reduce a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 310 may include a plurality of groups of I2C buses. The processor 310 may be coupled to the touch sensor 380K, a charger, a flash light, the camera 393, and the like through different I2C bus interfaces. For example, the processor 310 may be coupled to the touch sensor 380K by using the I2C interface, so that the processor 310 communicates with the touch sensor 380K through the I2C bus interface, to implement a touch function of the terminal 201.

The I2S interface may be used for audio communication. In some embodiments, the processor 310 may include a plurality of groups of I2S buses. The processor 310 may be coupled to the audio module 370 through the I2S bus, to implement communication between the processor 310 and the audio module 370. In some embodiments, the audio module 370 may transmit an audio signal to the wireless communications module 360 through the I2S interface, to implement a function of answering a call by using a Bluetooth headset.

The PCM interface may also be configured for audio communication, and sample, quantize, and code an analog signal. In some embodiments, the audio module 370 may be coupled to the wireless communications module 360 through a PCM bus interface. In some embodiments, the audio module 370 may also transmit an audio signal to the wireless communications module 360 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually configured to connect the processor 310 to the wireless communications module 360. For example, the processor 310 communicates with a Bluetooth module in the wireless communications module 360 through the UART interface, to implement a Bluetooth function. In some embodiments, the audio module 370 may transmit an audio signal to the wireless communications module 360 through the UART interface, to implement a function of playing music by using a Bluetooth headset.

The MIPI interface may be configured to connect the processor 310 to a peripheral component such as the display 394 or the camera 393. The MIPI interface includes a camera serial interface (camera serial interface, CSI), a display serial interface (display serial interface, DSI), and the like. In some embodiments, the processor 310 communicates with the camera 393 through the CSI interface, to implement a photographing function of the terminal 201. The processor 310 communicates with the display 394 through the DSI interface, to implement a display function of the terminal 201.

The GPIO interface may be configured by using software. The GPIO interface may be configured as a control signal, or may be configured as a data signal. In some embodiments, the GPIO interface may be configured to connect the processor 310 to the camera 393, the display 394, the wireless communications module 360, the audio module 370, the sensor module 380, and the like. The GPIO interface may alternatively be configured as the I2C interface, the I2S interface, the UART interface, the MIPI interface, or the like.

The USB interface 330 is an interface that conforms to a USB standard specification, and may be specifically a mini USB interface, a micro USB interface, a USB type C interface, or the like. The USB interface 330 may be configured to connect to the charger to charge the terminal 201, or may be configured to transmit data between the terminal 201 and a peripheral device. The USB interface may be alternatively configured to connect to a headset, to play audio by using the headset. The interface may be further configured to connect to another electronic device, for example, an AR device.

It may be understood that an interface connection relationship between the modules that is shown in the embodiments is merely an example for description, and does not constitute a limitation on the structure of the terminal 201. In some other embodiments, the terminal 201 may alternatively use an interface connection manner different from that in the foregoing embodiment, or a combination of a plurality of interface connection manners.

The charging management module 330 is configured to receive a charging input from the charger. The charger may be a wireless charger or a wired charger. In some embodiments of wired charging, the charging management module 330 may receive a charging input of a wired charger through the USB interface 330. In some embodiments of wireless charging, the charging management module 330 may receive a wireless charging input through a wireless charging coil of the terminal 201. The charging management module 330 supplies power to the electronic device by using the power management module 341 while charging the battery 342.

The power management module 341 is configured to connect to the battery 342, the charging management module 330, and the processor 310. The power management module 341 receives an input of the battery 342 and/or the charging management module 330, and supplies power to the processor 310, the internal memory 321, an external memory, the display 394, the camera module 393, the wireless communications module 360, and the like. The power management module 341 may be further configured to monitor parameters such as a battery capacity, a battery cycle count, and a battery health status (electric leakage or impedance). In some other embodiments, the power management module 341 may alternatively be disposed in the processor 310. In some other embodiments, the power management module 341 and the charging management module 330 may alternatively be disposed in a same component.

A wireless communication function of the terminal 201 may be implemented by using the antenna 1, the antenna 2, the mobile communications module 350, the wireless communications module 360, the modem processor, the baseband processor, and the like.

The antenna 1 and the antenna 2 are configured to transmit and receive an electromagnetic wave signal. Each antenna on the terminal 201 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 350 can provide a solution, applied to the terminal 201, to wireless communication including 2G, 3G, 4G, 5G, and the like. The mobile communications module 350 may include at least one filter, a switch, a power amplifier, a low noise amplifier (low noise amplifier, LNA), and the like. The mobile communications module 350 may receive an electromagnetic wave through the antenna 1, perform processing such as filtering or amplification on the received electromagnetic wave, and transmit the electromagnetic wave to the modem processor for demodulation. The mobile communications module 350 may further amplify a signal modulated by the modem processor, and convert an amplified signal into an electromagnetic wave for radiation through the antenna 1. In some embodiments, at least some function modules in the mobile communications module 350 may be disposed in the processor 310. In some embodiments, at least some function modules in the mobile communications module 350 and at least some modules in the processor 310 may be disposed in a same component.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 370A, the receiver 370B, or the like), or displays an image or a video by using the display 394. In some embodiments, the modem processor may be an independent component. In some other embodiments, the modem processor may be independent of the processor 310, and is disposed in a same component as the mobile communications module 350 or another functional module.

The wireless communications module 360 may provide a wireless communication solution applied to the terminal 201 such as a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, or an infrared (infrared, IR) technology. The wireless communications module 360 may be one or more components integrating at least one communications processor module. The wireless communications module 360 receives an electromagnetic wave through the antenna 2, performs frequency modulation and filtering processing on the electromagnetic wave signal, and sends a processed signal to the processor 310. The wireless communications module 360 may further receive a to-be-sent signal from the processor 310, perform frequency modulation and amplification on the signal, and convert a processed signal into an electromagnetic wave for radiation through the antenna 2.

In some embodiments, the antenna 1 of the terminal 201 is coupled to the mobile communications module 350, and the antenna 2 is coupled to the wireless communications module 360, so that the terminal 201 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal 201 implements the display function through the GPU, the display 394, the application processor, and the like. The GPU is a microprocessor for image processing, and is connected to the display 394 and the application processor. The GPU is configured to perform mathematical and geometric calculation, and render an image. The processor 310 may include one or more GPUs, and execute a program instruction to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a MiniLED, a MicroLED, a micro-oLED, a quantum dot light emitting diode (quantum dot light emitting diodes, QLED), or the like. In some embodiments, the terminal 201 may include one display 394 or N displays 394, where N is a positive integer greater than 1.

The terminal 201 can implement the photographing function through the ISP, the camera 393, the video codec, the GPU, the display 394, the application processor, and the like.

The ISP is configured to process data fed back by the camera 393. For example, during photographing, a shutter is pressed, a ray of light is transmitted to a light-sensitive element of a camera through a lens, and an optical signal is converted into an electrical signal. The light-sensitive element of the camera transmits the electrical signal to the ISP for processing, and converts the electrical signal into a visible image. The ISP may further optimize an algorithm for noise, luminance, and complexion of an image. The ISP may further optimize parameters such as exposure and a color temperature of a shooting scenario. In some embodiments, the ISP may be disposed in the camera 393.

The camera 393 is configured to capture a static image or a video. An optical image of an object is generated through the lens, and is projected to the light-sensitive element. The light-sensitive element may be a charge-coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the terminal 201 may include one camera 393 or N cameras 393, where N is a positive integer greater than 1.

The digital signal processor is configured to process a digital signal. In addition to the digital image signal, the digital signal processor may further process another digital signal. For example, when the terminal 201 selects a frequency, the digital signal processor is configured to perform Fourier transform, and the like on frequency energy.

The video codec is configured to compress or decompress a digital video. The terminal 201 may support one or more video codecs. In this way, the terminal 201 can play or record videos in a plurality of coding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the terminal 201 may be implemented through the NPU, for example, image recognition, facial recognition, speech recognition, and text understanding.

The external memory interface 320 may be connected to an external storage card, for example, a micro SD card, to extend a storage capability of the terminal 201. The external storage card communicates with the processor 310 through the external memory interface 320, to implement a data storage function. For example, a file, for example, music or a video, is stored into the external storage card.

The internal memory 321 may be configured to store computer-executable program code, and the computer-executable program code includes an instruction. The processor 310 runs the instruction stored in the internal memory 321, to implement various function applications and data processing of the terminal 201. The internal memory 321 may include a program storage area and a data storage area. The program storage area may store an operating system, an application required by at least one function (for example, a voice playing function or an image playing function), and the like. The data storage area may store data (for example, audio data and an address book) created during use of the terminal 201, and the like. In addition, the internal memory 321 may include a high-speed random access memory, and may further include a nonvolatile memory, for example, at least one magnetic disk storage device, a flash memory device, or a universal flash storage (universal flash storage, UFS).

The terminal 201 can implement an audio function such as music playing and recording through the audio module 370, the speaker 370A, the telephone receiver 370B, the microphone 370C, the headset interface 370D, the application processor, and the like.

The audio module 370 is configured to convert digital audio information into an analog audio signal for output, or is configured to convert an analog audio input into a digital audio signal. The audio module 370 may be further configured to code and decode an audio signal. In some embodiments, the audio module 370 may be disposed in the processor 310, or some function modules in the audio module 370 are disposed in the processor 310.

The speaker 370A, also referred to as a "loudspeaker", is configured to convert an audio electrical signal into a sound signal. The terminal 201 may play music or receive a hands-free call through the speaker 370A.

The receiver 370B, also referred to as an "earpiece", is configured to convert an audio electrical signal into a sound signal. When a call is answered or voice information is received through the terminal 201, the receiver 370B may be put close to a human ear to receive a voice.

The microphone 370C, also referred to as a "mic" or a "sound conducting device", is configured to convert a sound signal into an electrical signal. When making a call or sending a voice message, a user may make a sound near the microphone 370C through the mouth of the user to input a sound signal to the microphone 370C. At least one microphone 370C may be disposed on the terminal 201. In some other embodiments, two microphones 370C may be disposed on the terminal 201, to collect a sound signal and further implement a noise reduction function. In some other embodiments, three, four, or more microphones 370C may alternatively be disposed on the terminal 201, to collect a sound signal, reduce noise, further identify a sound source, implement a directional recording function, and the like.

The headset jack 370D is configured to connect to a wired headset. The headset jack 370D may be the USB interface 330, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 380A is configured to sense a pressure signal, and can convert the pressure signal into an electrical signal. In some embodiments, the pressure sensor 380A may be disposed on the display 394. There are many types of pressure sensors 380A, such as a resistive pressure sensor, an inductive pressure sensor, and a capacitive pressure sensor. The capacitive pressure sensor may include at least two parallel plates made of a conductive material. When a force is applied to the pressure sensor 380A, capacitance between electrodes changes. The terminal 201 determines pressure strength based on a capacitance change. When a touch operation is performed on the display 394, the terminal 201 detects intensity of the touch operation by using the pressure sensor 380A. The terminal 201 may also calculate a touch location based on a detection signal of the pressure sensor 380A. In some embodiments, touch operations that are performed on a same touch position but have different touch operation intensity may correspond to different operation instructions. For example, when a touch operation whose touch operation intensity is less than a first pressure threshold is performed on a Messages application icon, a message viewing instruction is performed. When a touch operation whose touch operation intensity is greater than or equal to the first pressure threshold is performed on the Messages application icon, an instruction for creating a new message is performed.

The gyro sensor 380B may be configured to determine a moving posture of the terminal 201. In some embodiments, angular velocities of the terminal 201 around three axes (namely, x, y, and z axes) may be determined through the gyro sensor 380B. The gyro sensor 380B may be configured to implement image stabilization during photographing. For example, when the shutter is pressed, the gyro sensor 380B detects an angle at which the terminal 201 jitters, calculates, based on the angle, a distance for which a lens module needs to compensate, and allows the lens to cancel the jitter of the terminal 201 through reverse motion, to implement image stabilization. The gyro sensor 380B may also be used in a navigation scenario and a somatic game scenario.

The barometric pressure sensor 380C is configured to measure barometric pressure. In some embodiments, the terminal 201 calculates an altitude by using a barometric pressure value measured by the barometric pressure sensor 380C, to assist positioning and navigation.

The magnetic sensor 380D includes a Hall sensor. The terminal 201 may detect opening and closing of a flip cover through the magnetic sensor 380D. In some embodiments, when the terminal 201 is a clamshell phone, the terminal 201 may detect opening and closing of a flip cover based on the magnetic sensor 380D, to set a feature such as automatic unlocking through flipping based on a detected opening or closing state of the flip cover or a detected opening or closing state of the flip cover.

The acceleration sensor 380E may detect magnitude of accelerations in various directions (usually on three axes) of the terminal 201. When the terminal 201 is still, magnitude and a direction of gravity may be detected. The acceleration sensor 380E may be further configured to identify a posture of the electronic device, and is applied to an application such as switching between landscape orientation and portrait orientation or a pedometer.

The distance sensor 380F is configured to measure a distance. The terminal 201 may measure a distance through infrared light or a laser. In some embodiments, in a photographing scenario, the terminal 201 may measure a distance through the distance sensor 380F to implement quick focusing.

The optical proximity sensor 380G may include, for example, a light emitting diode (LED) and an optical detector, for example, a photodiode. The light emitting diode may be an infrared light emitting diode. The terminal 201 emits infrared light through the light emitting diode. The terminal 201 detects infrared reflected light from a nearby object through the photodiode. When sufficient reflected light is detected, it may be determined that there is an object near the terminal 201. When insufficient reflected light is detected, the terminal 201 may determine that there is no object near the terminal 201. The terminal 201 may detect, through the optical proximity sensor 380G, that the user holds the terminal 201 close to an ear to make a call, to automatically perform screen-off for power saving. The optical proximity sensor 380G may also be used in a smart cover mode or a pocket mode to automatically perform screen unlocking or locking.

The ambient light sensor 380L is configured to sense ambient light luminance. The terminal 201 may adaptively adjust luminance of the display 394 based on the sensed ambient light luminance. The ambient light sensor 380L may also be configured to automatically adjust white balance during photographing. The ambient light sensor 380L may also cooperate with the optical proximity sensor 380G to detect whether the terminal 201 is in a pocket, to avoid an accidental touch.

The fingerprint sensor 380H is configured to collect a fingerprint. The terminal 201 may implement fingerprint-based unlocking, application lock access, fingerprint-based photographing, fingerprint-based call answering, and the like by using a feature of the collected fingerprint.

The temperature sensor 380J is configured to detect a temperature. In some embodiments, the terminal 201 executes a temperature processing policy by using a temperature detected by the temperature sensor 380J. For example, when the temperature reported by the temperature sensor 380J exceeds a threshold, the terminal 201 lowers performance of a processor nearby the temperature sensor 380J, to reduce power consumption for thermal protection. In some other embodiments, when the temperature is lower than another threshold, the terminal 201 heats the battery 342 to prevent the terminal 201 from being shut down abnormally because of a low temperature. In some other embodiments, when the temperature is lower than still another threshold, the terminal 201 boosts an output voltage of the battery 342 to avoid abnormal shutdown caused by a low temperature.

The touch sensor 380K is also referred to as a "touch panel". The touch sensor 380K may be disposed on the display 394, and the touch sensor 380K and the display 394 constitute a touchscreen, which is also referred to as a "touchscreen". The touch sensor 380K is configured to detect a touch operation on or near the touch sensor 380K. The touch sensor may transmit the detected touch operation to the application processor to determine a type of the touch event. A visual output related to the touch operation may be provided through the display 394. In some other embodiments, the touch sensor 380K may alternatively be disposed on a surface of the terminal 201 in a location different from that of the display 394.

The bone conduction sensor 380M may obtain a vibration signal. In some embodiments, the bone conduction sensor 380M may obtain a vibration signal of a vibration bone of a human vocal-cord part. The bone conduction sensor 380M may also contact a body pulse to receive a blood pressure beating signal. In some embodiments, the bone conduction sensor 380M may alternatively be disposed in the headset, to obtain a bone conduction headset. The audio module 370 may obtain a speech signal through parsing based on the vibration signal that is of the vibration bone of the vocal-cord part and that is obtained by the bone conduction sensor 380M, to implement a speech function. The application processor may parse heart rate information based on the blood pressure beating signal obtained by the bone conduction sensor 380M, to implement a heart rate detection function.

The button 390 includes a power button, a volume button, and the like. The button 390 may be a mechanical button, or a touch button. The terminal 201 may receive a button input, and generate a button signal input related to a user setting and function control of the terminal 201.

The motor 391 may generate a vibration prompt. The motor 391 may be configured to provide an incoming call vibration prompt and a touch vibration feedback. For example, touch operations performed on different applications (for example, a photographing application and an audio playing application) may correspond to different vibration feedback effects. The motor 391 may also correspond to different vibration feedback effects for touch operations performed on different areas of the display 394. Different application scenarios (for example, a time reminder scenario, an information receiving scenario, an alarm clock scenario, and a game scenario) may also correspond to different vibration feedback effects. A touch vibration feedback effect may alternatively be customized.

For example, the indicator 392 may be an indicator light that may be configured to indicate a charging status and a power change, or may be configured to indicate a message, a missed call, a notification, and the like.

The SIM card interface 395 is configured to connect to a SIM card. The SIM card may be inserted into the SIM card interface 395 or detached from the SIM card interface 395, to implement contact with or separation from the terminal 201. The terminal 201 may support one or N SIM card interfaces, where N is a positive integer greater than 1. The SIM card interface 395 may support a nano-SIM card, a micro-SIM card, a SIM card, and the like. A plurality of cards may be inserted into one SIM card interface 395 at the same time. The plurality of cards may be of a same type or different types. The SIM card interface 395 may also be compatible with different types of SIM cards, and the SIM card interface 395 may also be compatible with an external storage card. The terminal 201 interacts with a network by using the SIM card, to implement functions such as calling and data communication. In some embodiments, the terminal 201 uses an eSIM, namely, an embedded SIM card. The eSIM card may be embedded in the terminal 201, and cannot be separated from the terminal 201.

A software system of the terminal 201 may use a layered architecture, an event-driven architecture, a microkernel architecture, a micro service architecture, or a cloud architecture. In the embodiments of the present invention, an Android system with the layered architecture is used as an example to describe a software structure of the terminal 201.

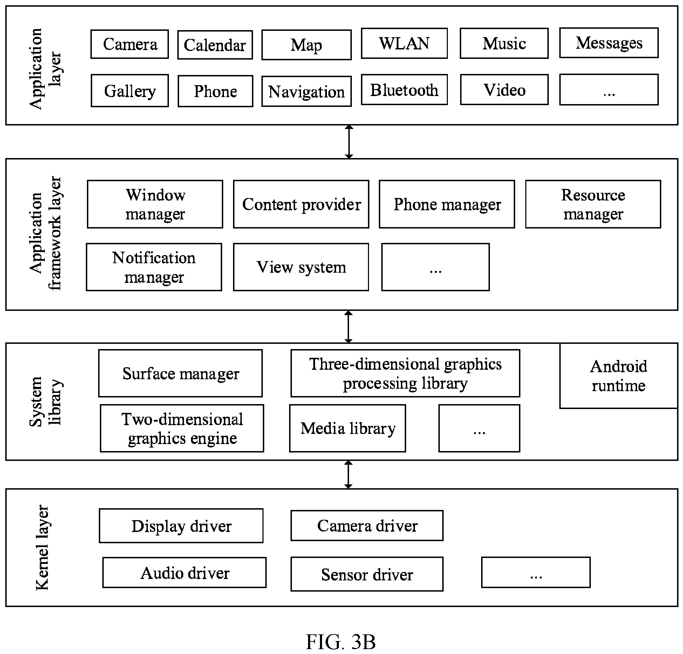

FIG. 3B is a block diagram of a software structure of the terminal 201 according to an embodiment. In the layered architecture, software is divided into several layers, and each layer has a clear role and task. The layers communicate with each other through a software interface. In some embodiments, an Android system is divided into four layers: an application layer, an application framework layer, Android runtime (Android runtime) and a system library, and a kernel layer from top to bottom. The application layer may include a series of application packages.

As shown in FIG. 3B, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3B, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to: store and obtain data, and enable the data to be accessed by an application. The data may include a video, an image, an audio, calls that are made and received, a browsing history and bookmarks, an address book, and the like.

The view system includes visual controls such as a control for displaying a text and a control for displaying a picture, and the view system may be configured to construct an application. A display interface may include one or more views. For example, a display interface including a Messages notification icon may include a text display view and an image display view.

The phone manager is configured to provide a communication function of the terminal 201, for example, management of a call status (including answering or declining).

The resource manager provides various resources such as a localized character string, an icon, a picture, a layout file, and a video file for an application.

The notification manager enables an application to display notification information in a status bar, and may be configured to convey a notification-type message. The notification-type message may automatically disappear after the message is displayed for a short period of time without user interaction. For example, the notification manager is configured to provide a notification of download completion, a message reminder, and the like. The notification manager may alternatively be a notification that appears on the top of a status bar of a system in the form of a graph or a scroll bar text, for example, a notification of an application running in the background or a notification that appears on the screen in the form of a dialog window. For example, text information is prompted in the status bar, an alert sound is produced, the electronic device vibrates, or the indicator light blinks.

The Android runtime includes a kernel library and a virtual machine, and the Android runtime is responsible for scheduling and management of the Android system.

The kernel library includes two parts: a function that needs to be invoked by a Java language and a kernel library of Android.

The application layer and the application framework layer run on the virtual machine. The virtual machine executes a Java file at the application layer and the application framework layer as a binary file. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording of a plurality of commonly used audio and video formats, static image files, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes examples of working procedures of software and hardware of the terminal 201 with reference to a scenario of logging in to an application server.

When the touch sensor receives a touch operation of tapping a login button by a user, a corresponding hardware interrupt is sent to the kernel layer. The kernel layer processes the touch operation into a raw input event (including information such as touch coordinates or a timestamp of the touch operation). The raw input event is stored at the kernel layer. The application framework layer obtains the raw input event from the kernel layer, and identifies a control corresponding to the input event. An application invokes an interface of the application framework layer to start the application, then invokes the kernel layer to drive a transceiver, and sends login request information to the server through the transceiver.

In the following embodiments of this application, the terminal 201 having the structures shown in FIG. 3A and FIG. 3B is used as an example to specifically describe the technical solutions provided in the embodiments of this application.

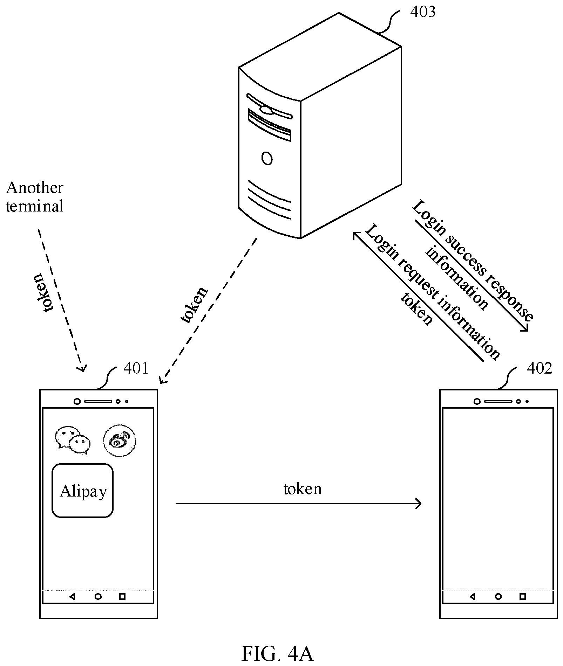

Some embodiments of this application provide a method for logging in to an application server. As shown in FIG. 4A, a first terminal 401 may directly obtain a first token (token) of a first application from an application server of the first application, or a first terminal 401 may indirectly obtain a first token of a first application from another terminal, and then send the first token to a second terminal 402. After the second terminal 402 receives the first token sent by the first terminal 401, if the second terminal 402 does not log in to the application server 403 of the first application currently, the second terminal 402 may log in to the application server 403 based on the first token. A user does not need to enter, on the second terminal 402, a login account and a password corresponding to the first application. Therefore, an entering operation of the user can be omitted, and the second terminal 402 can quickly log in to the application server 403 automatically. That the second terminal 402 does not log in to the application server 403 currently means that the second terminal 402 has never logged in to the application server 403 before, or the second terminal 402 logged in to the application server 403 before, but logs out of the application server 403 currently.

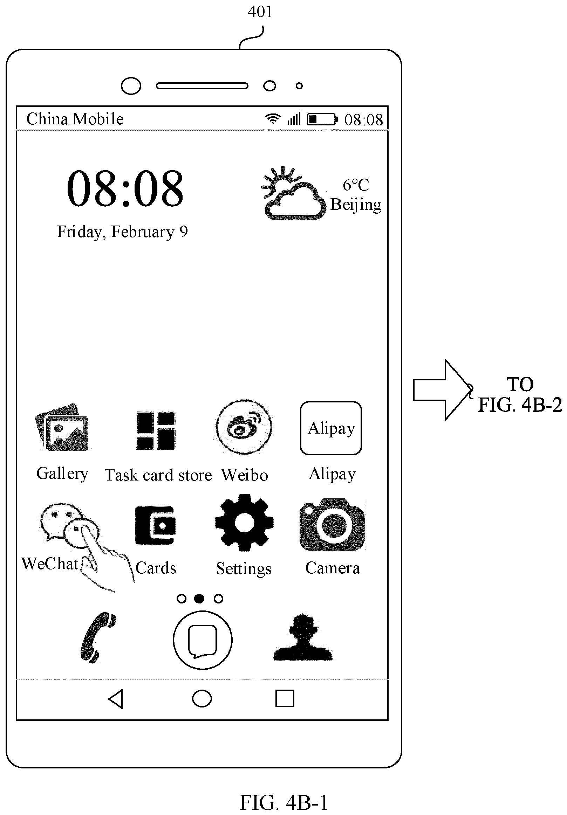

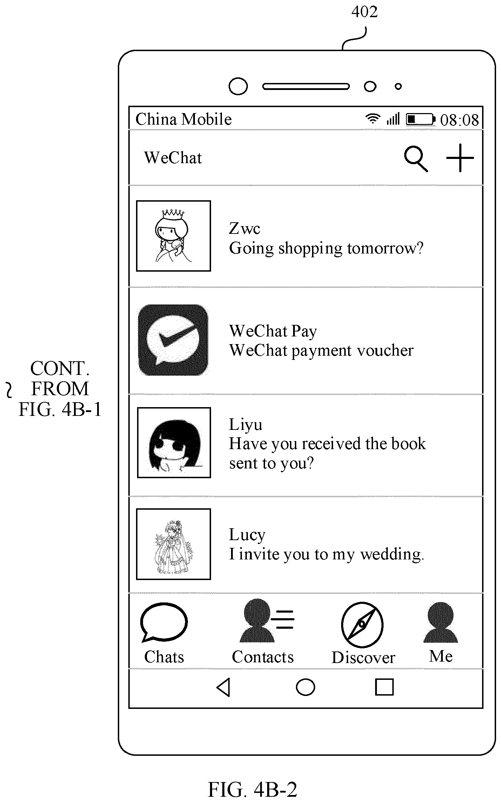

For example, it is assumed that tokens sent by the first terminal 401 to the second terminal 402 include a token 1 corresponding to a WeChat application, the WeChat APP is installed on the second terminal 402, and the second terminal 402 does not log in to a WeChat application server currently. Referring to FIG. 4B-1, when the user taps a WeChat icon on a home screen of the second terminal 402, the second terminal 402 may establish a connection to the WeChat application server based on the token 1, and open a WeChat application interface shown in FIG. 4B-2.

After the second terminal 402 receives the first token sent by the first terminal 401, if the second terminal 402 logs in to the application server 403 of the first application currently, in one case, the second terminal 402 may establish a connection to the application server 403 of the first application based on the first token, to use a service of the first application. In another case, the second terminal 402 may delete the first token, and establish a connection to the application server 403 based on a token used when the second terminal 402 previously logs in to the application server 403, to use the service of the first application.

In the embodiments of this application, a process in which the first terminal 401 sends a token to the second terminal 402 may alternatively be referred to as token synchronization or cloning.

The method for logging in to an application server provided in the embodiments of this application is applicable to but is not limited to being applicable to the following token synchronization scenarios:
Scenario 1: Token synchronization in a new machine scenario.
   For example, the user has an old mobile phone and buys a new mobile phone. The new mobile phone does not log in to the first application currently, and the user has not entered, on the new mobile phone, a login account and a password corresponding to the first application yet. The old mobile phone may send the first token of the first application to the new mobile phone, and the new mobile phone may directly log in to the application server of the first application automatically based on the first token received from the old mobile phone, to use the service of the first application. The user does not need to enter, on the new mobile phone, the login account and the password of the first application. The old mobile phone may be the first terminal 401 in FIG. 4A, and the new mobile phone may be the second terminal 402 in FIG. 4A.
   It should be noted that, when tokens of a plurality of applications need to be synchronized between the new mobile phone and the old mobile phone, the new mobile phone may log in to the plurality of applications by using the tokens, of the plurality of applications, synchronized from the old mobile phone, so that a login status of each application on the new mobile phone can be consistent with that on the old mobile phone. From a perspective of the user, the user can automatically log in to a plurality of logged-in applications on the old mobile phone without entering a login account and a password, so that the login status of each application on the new mobile phone consistent with that on the old mobile phone.
Scenario 2: Token synchronization between terminals in different locations.
   For example, there is an iPad 1 at home of the user, and the iPad 1 may send the first token of the first application (for example, Weibo) to an iPad 2 in the office of the user. When the user uses the iPad 2 in the office, if the iPad 2 does not log in to the application server of the first application currently, the iPad 2 may directly log in to the application server of the first application based on the first token sent by the iPad 2, and the user does not need to enter a login account and a password on the iPad 2. Alternatively, after the iPad 2 logs in to the application server of the first application, the iPad 2 may establish a connection to the application server of the first application based on the first token, to use the service of the first application. The iPad 1 may be the first terminal 401 in FIG. 4A, and the iPad 2 may be the second terminal 402 in FIG. 4A.
Scenario 3: Token synchronization between different devices in a same location.

For example, at home, a mobile phone of the user may send the first token of the first application (for example, Weibo) to a notebook computer in the study, and the user puts the mobile phone in the living room. If the notebook computer does not log in to the application server of the first application currently, the notebook computer may directly log in to the application server of the first application based on the first token sent by the mobile phone, and the user does not need to enter a login account and a password on the notebook computer. Alternatively, after the notebook computer logs in to the application server of the first application, the notebook computer may establish a connection to the application server of the first application based on the first token, to use the service of the first application. The mobile phone may be the first terminal 401 in FIG. 4A, and the notebook computer may be the second terminal 402 in FIG. 4A.

It should be noted that the foregoing listed application scenarios are merely example descriptions of the token synchronization scenario, and token synchronization may be further used in another application scenario. This is not limited in the embodiments of this application.

The following describes in detail the technical solutions provided in the embodiments of this application by using an example in which the old mobile phone is a first terminal and the new mobile phone is a second terminal in the new machine replacement scenario.

An embodiment of this application provides a token sending method, and the method may be applied to a first terminal. Referring to FIG. 5, the method may include the following steps.

501. The first terminal sends login request information to an application server of a first application, where the login request information includes a login account and a password for logging in to the application server.

When a user indicates to log in to the first application (for example, when the user taps a login button in an interface corresponding to a WeChat application), the first terminal may receive a login account (for example, a user name, an email address, or a mobile number) and a password (which may be a text password, or may be biological password information such as a fingerprint, a voiceprint, or an iris, or may be other password information such as a gesture or a specific track) that are entered by the user, and send the login request information including the login account and the password information to the application server of the first application.

502. The first terminal receives a first token that is sent by the application server and that allows login to the application server.

After receiving the login account and the password that are sent by the first terminal, the application server verifies the login account and the password. If the login account and the password are verified, the application server sends, to the first terminal, a credential, that is, the first token used to establish a connection to the application server.

After step 502, the first terminal automatically sends the first token to the application server of the first application. After determining that the first token is valid, the first application server sends login success response information to the first terminal, to notify the first terminal that the first terminal has successfully logged in to the application server.

503. The first terminal sends the first token to a second terminal, so that the second terminal automatically logs in to the application server by using the first token.

After receiving the first token sent by the application server, the first terminal may send the first token to the second terminal, so that the second terminal requests to log in to the application server based on the first token. The first token sent by the first terminal may specifically include the first token and a correspondence between the first token and the first application, so that after receiving the first token sent by the first terminal, the second terminal can log in to the application server of the first application corresponding to the first token based on the first token.

In this solution, the first terminal may synchronize, with the second terminal, the first token obtained when the first terminal logs in to the application server of the first application, so that the second terminal directly requests to log in to the application server based on the first token, the user does not need to enter information such as a password on the second terminal, and the second terminal does not need to send the information such as the password to the application server, thereby reducing entering operations of the user. Therefore, the second terminal can quickly log in to the application server of the first application automatically.

In some embodiments, referring to FIG. 6, step 503 may specifically include the following steps:
504A. The first terminal informs the user that the first token is to be sent to the second terminal, and/or verifies user permission.
504B. The first terminal sends the first token to the second terminal after user confirmation is obtained and/or the user permission is verified.

In some solutions, the first terminal may prompt the user, so that the user learns that the first token is to be sent to the second terminal, and/or the first terminal may verify the user permission. The first terminal sends the first token to the second terminal after the user confirmation is obtained and/or the user permission is verified. For example, the first terminal may prompt the user through voice or display. For example, when the first application is a WeChat application, the first terminal may inform, through voice, the user that "this device is to send a login credential to another device, and the another device can log in to your WeChat account based on the login credential". For another example, the first terminal may inform, through a displayed pop-up window, the user that "this device is sending a WeChat token to another device, and a device that receives the token can log in to your WeChat account". In addition, "Agree/OK" and "Cancel/Quit" buttons are provided for the user in a user prompt interface to determine whether to perform or cancel a token sending operation.

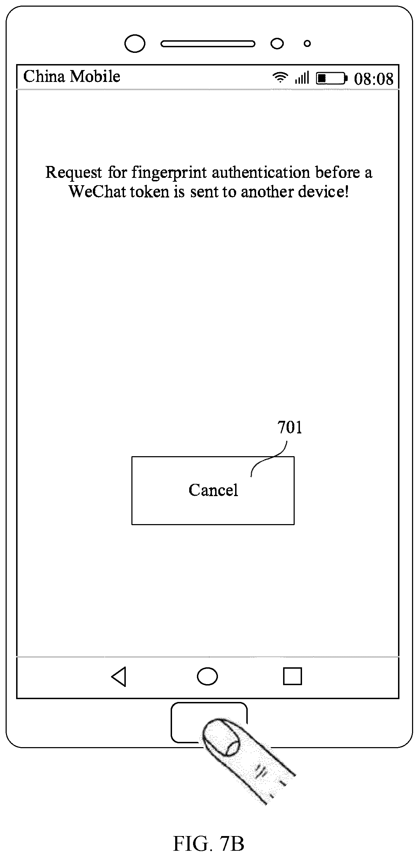

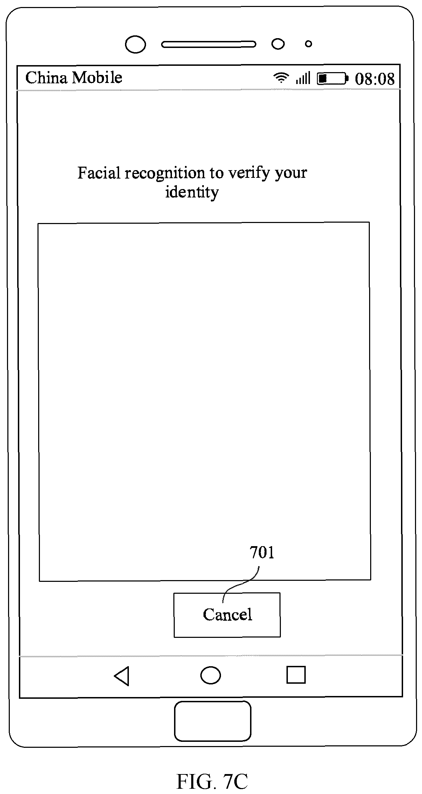

In some other solutions, the first terminal may verify the user permission, and the first terminal may send the first token to the second terminal after determining that the user permission is valid. For example, the first terminal may prompt the user to perform password authentication, voice authentication, SMS verification code authentication, email confirmation, and authentication of biometric feature information such as a fingerprint, an iris, a face, or a voiceprint. For example, referring to in FIG. 7A, the first terminal may prompt the user to perform password authentication. Referring to FIG. 7B, the first terminal may prompt the user to perform fingerprint authentication. Alternatively, referring to FIG. 7C, the first terminal may prompt the user to perform facial recognition authentication. Alternatively, the first terminal may send an SMS message to a mobile number reserved by the user, and prompt the user to enter an SMS verification code for authentication. Alternatively, the first terminal may send an email to an email address reserved by the user, and after receiving a confirmation email from the user, determine that the user permission is valid.

In addition, the user may further indicate to stop sending the first token to the another device. For example, as shown in FIG. 7A to FIG. 7C, an authentication interface may further include a cancel button. When the user taps the cancel button, the first terminal stops sending the first token to the second terminal. For another example, the user may indicate, through voice, to stop sending the first token to the another device.

In some other solutions, before the first terminal sends the first token to the second terminal, the first terminal may prompt the user and verify the user permission. Details are not described herein.

In some other embodiments, after step 503, the method may further include the following steps.

505. The first terminal receives first prompt information sent by the second terminal or the application server, where the first prompt information is used to indicate that the second terminal receives the first token and/or the second terminal is performing a login operation by using the first token.

After receiving the first token, the second terminal may send the first prompt information to the first terminal, to indicate that the second terminal receives the first token. Alternatively, when logging in to the application server by using the first token, the second terminal may send the first prompt information to the first terminal, to indicate that the second terminal is performing a login operation by using the first token. Alternatively, when the second terminal is logging in to the application server by using the first token, the application server may send the first prompt information to the first terminal, to indicate that the second terminal is performing a login operation by using the first token. The first terminal may learn, based on the first prompt information sent by the second terminal or the application server, that the second terminal receives the first token and/or the second terminal is performing a login operation by using the first token.

When delivering a token, a server records the token and an ID (a device ID, account information, a MAC address/an IP address, or the like) of a terminal (that is, the first terminal) that requests and send the token. When receiving a token, the server checks whether an ID of a terminal (the second terminal) that submits the token matches the terminal corresponding to the stored token. If the ID of the terminal that submits the token matches the terminal corresponding to the stored token, the server allows the terminal to log in to the first application. If the ID of the terminal that submits the token does not match the terminal corresponding to the stored token, the server sends the first prompt information to the terminal (the first terminal) corresponding to the stored token.

506. The first terminal sends suspension information to the second terminal or the application server based on a user indication, so that the second terminal cannot log in to the application server by using the first token.

After receiving the first prompt information, the second terminal may inform the user that the another device receives the first token and/or that the another device is performing a login operation by using the first token. If the second terminal is an insecure device, or if the user does not want the second terminal to log in to the application server based on the first token, the user may enter indication information. The first terminal sends the suspension information to the second terminal or the application server based on the user indication, to suspend an operation of logging in to the application server by the second terminal by using the first token, thereby improving login security. For example, the first terminal may indicate, by using the suspension information, the second terminal not to send the first token to the application server, or indicate that the second terminal cannot use the first token, to prevent the second terminal from using the first token.

In addition, if a preset condition is met (for example, the suspension information is not received within a preset time) after the application server sends the prompt information, the application server saves a correspondence between the ID of the second terminal and the token.

In this embodiment of this application, the first terminal may send/synchronize at least one token of at least one application to/with the second terminal. The first application may be one of the at least one application, and the first token may be one of the at least one token.

For example, the first terminal may send a WeChat token, a Weibo token, an Alipay token, and a Taobao token to the second terminal. In this way, the second terminal can directly log in to application servers of WeChat, Weibo, Alipay, and Taobao automatically based on the WeChat token, the Weibo token, the Alipay token, and the Taobao token that are obtained from the first terminal, and the user does not need to separately enter login accounts and passwords of WeChat, Weibo, Alipay and Taobao. Therefore, statuses of these applications on the second terminal can be synchronized with those on the first terminal.

The first terminal may synchronize a token with the second terminal in a plurality of manners. For example, the token may be sent through one or more of a communications network, an external device serving as a medium, or a wired connection (for example, a data line connection). The communications network may be a local area network, or may be a wide area network relayed by using a relay (relay) device. When the communications network is a local area network, the local area network may be, for example, a short-distance communications network such as a Wi-Fi hotspot network, a Wi-Fi P2P network, a Bluetooth P2P network, a ZigBee network, a radio frequency network, or a near field communication (near field communication, NFC) network. In some embodiments, the local area network may be a point-to-point wireless communications network such as a Wi-Fi P2P network or a Bluetooth P2P network, and the first terminal may synchronize the token with the second terminal through a direct connection. When the communications network is a wide area network, the communications network may be, for example, the internet, a cloud service network, a fourth-generation mobile communications technology (the 4th generation mobile communication technology, 4G) network, or a future evolved public land mobile network (public land mobile network, PLMN). The following provides a detailed description by using examples.

### Manner 1: A token is synchronized through a cloud server.

In one case, the first terminal stores a token, of an application, and that is obtained from an application server or another device, and synchronizes the token to another terminal through the cloud server. Specifically, in a solution, the first terminal sends the stored token to the cloud server for storage, and the cloud server sends the token corresponding to the first terminal to the another terminal based on a request of the first terminal. In another solution, the cloud server does not store the token corresponding to the first terminal, and when the second terminal requests to obtain the token from the cloud server, the cloud server pulls the token from the first terminal and forwards the token to the second terminal.

In another case, after obtaining a token sent by the application server, the first terminal does not store the token locally, but stores the token on the cloud server. The cloud server may send the token corresponding to the first terminal to the second terminal. When the first terminal needs to use the token, the first terminal may obtain the token from the cloud server.

Specifically, a process in which the first terminal synchronizes the token with the second terminal through the cloud server may include: A user logs in to a cloud account (for example, a Huawei account or an MI account) corresponding to the cloud server by using the first terminal. The first terminal sends the obtained token of the application to all terminals (including the second terminal) associated with the cloud account. Alternatively, the first terminal sends the obtained token of the application to some terminals (including the second terminal) that are specified by the user and that are associated with the cloud account.

For example, after the user logs in to the Huawei account by using the first terminal, an interface displayed by the first terminal may include device identifiers of terminals associated with the current Huawei account and a token synchronization switch. The user can turn on the token synchronization switch to synchronize tokens.

For example, after the user logs in to the Huawei account by using the first terminal, the first terminal may display an interface shown in FIG. 8A. When the user turns on the token synchronization switch, the first terminal may push, through the cloud server, the token to another device associated with the Huawei account.

For example, after the user logs in to the Huawei account by using the first terminal, the first terminal may display the interface shown in FIG. 8A. When the user turns on the token synchronization switch, the first terminal may automatically send the token obtained from the server to another device associated with the Huawei account.

For another example, after the user logs in to the Huawei account by using the first terminal, the first terminal may display an interface shown in FIG. 8B. The user may select some or all terminals associated with the Huawei account. The first terminal may push, through the cloud server, the token to another device associated with the Huawei account, or the first terminal sends the token obtained from the server to the at least one selected terminal.

For another example, after the user logs in to the Huawei account by using the first terminal, the first terminal may display an interface shown in FIG. 8C. When the user selects some or all terminals associated with the Huawei account, any one of the selected terminals may send the token obtained from the server to another terminal in the selected terminals.

In the scenarios shown in FIG. 8A to FIG. 8C, the first terminal may be Huawei P20 (referred to as P20 for short below), and the second terminal may be Huawei mate10 (referred to as mate10 for short below).

In some implementation solutions, a device associated with a Huawei account is a device that does not log out of the Huawei account. Alternatively, devices associated with a Huawei account include a device that does not log out of the Huawei account currently, and further include a device that currently logs out of the Huawei account but is associated with the Huawei account.

In addition, after the user logs in to the Huawei account by using the first terminal, the first terminal may further display an adding control, to help the user add a terminal device associated with the Huawei account. For example, as shown in FIG. 8B, "+" represents an adding control 801.

### Manner 2: A token is synchronized through a Bluetooth P2P direct connection.

The first terminal and the second terminal may establish a trusted secure connection relationship based on a Bluetooth P2P protocol, to synchronize a token through a Bluetooth P2P connection. For example, the first terminal may be P20, and the second terminal may be mate 10. As shown in FIG. 9A, the first terminal is paired with the second terminal. As shown in FIG. 9B, the second terminal is paired with the first terminal, and the first terminal sends the token to the second terminal that is paired with the first terminal through Bluetooth pairing.

### Method 3: A token is synchronized through an external mediation device.

The first terminal may copy a token to the external mediation device, and then copy the token to the second terminal through the external mediation device. The external mediation device may include an SD card, a USB flash drive, a removable hard disk, an optical disc, or the like.

In some embodiments, in a process of synchronizing a token of an application, the first terminal may encrypt the token and then send the encrypted token to the second terminal, to improve security of token transmission. After receiving the encrypted token, the second terminal decrypts the encrypted token, and directly establishes a connection to an application server based on the decrypted token, to use a service of the application. For example, encryption may be performed between the first terminal and the second terminal based on an encryption mechanism specified in a communications protocol of a communications network. For example, in a Wi-Fi P2P network, the first terminal may encrypt the token based on an encryption mechanism specified in a Wi-Fi P2P protocol, and then send the encrypted token to the second terminal. For another example, after establishing a Bluetooth P2P connection, the first terminal and the second terminal may negotiate a transmission encryption key of the token, to encrypt and transmit the token based on the transmission encryption key. For example, after performing Bluetooth pairing, the first terminal and the second terminal may exchange device digital certificates (namely, the transmission encryption key), to perform encryption and decryption based on the device digital certificates.

In addition, it should be noted that, compared with a login password of the user, a token is usually changed periodically (for example, updated once every five days) instead of being static or constant. Therefore, even if a token is leaked during synchronization and transmission, because a validity period of the token is relatively short, the impact is temporary. Therefore, insecurity impact of token leakage is far less than that of password leakage.

In some embodiments, the first terminal synchronizes a token of an application with the second terminal in the foregoing synchronization manner only when a preset synchronization policy is met. If the preset synchronization policy is not met, the first terminal does not synchronize the token of the application with another terminal. In this way, the fact that the token can be synchronized based on whether the preset synchronization policy is met, improves security of token synchronization, and prevents the token from being maliciously obtained by another device. The synchronization policy used by the first terminal may include but is not limited to the following several types:
(1) The first terminal periodically sends the token to the second terminal.
For example, a synchronization period is one day, and the first terminal may send the token of the application to the second terminal at an interval of one day. Alternatively, the first terminal may send the token of the application to the second terminal in the foregoing synchronization manner at a preset moment (for example, 6:00 a.m.) every day.
For example, at 6:00 a.m. every day, the first terminal may initiate a Bluetooth connection to the second terminal, and synchronize the token with the second terminal after establishing the connection. Alternatively, at 6:00 a.m. every day, the first terminal may synchronize the token with the second terminal through a 4G network.
In some embodiments, the token sent by the first terminal to the second terminal is a token of an application that is used recently, and the first terminal does not send a token of an application that is not used for a long time to the second terminal.
(2) After receiving an updated token sent by the application server, the first terminal sends the updated token to the second terminal.
The token sent by the application server of the application to the terminal is usually updated periodically (for example, updated once every five days). After receiving the updated token sent by the application server of the application, the first terminal may send the updated token to the second terminal.
(3) The first terminal sends the token to the second terminal in response to an indication operation of the user.
For example, after the user turns on the token synchronization service switch in a setting interface shown in FIG. 10 displayed by the first terminal and a Bluetooth connection is established between the first terminal and the second terminal, the first terminal may send the token to the second terminal through Bluetooth. In addition, as shown in FIG. 10, the first terminal may further present a token synchronization-related privacy agreement to the user. For another example, when the user turns on the token synchronization service switch in the setting interface shown in FIG. 10 displayed by the first terminal and the user inserts an external mediation device into the first terminal, the first terminal may send the token to the external mediation device, to copy the token to the second terminal through the external mediation device.
In some embodiments, step 503 may specifically include: The first terminal sends a token of at least one application to the second terminal in response to the indication operation of the user, where the token of the at least one application includes the first token of the first application. For example, referring to FIG. 11, a setting interface of the first terminal may further include a list of applications used to synchronize the token. The first terminal synchronizes the token based on applications selected by the user, and the first application is one of the applications selected by the user. In addition, as shown in FIG. 11, the setting interface may further include an adding control 1101, used to add an application that can be used to synchronize a token.
In a case, the token sent by the first terminal to the second terminal may be a token of an application selected by the user from the application list. Tokens synchronized by the first terminal may include a token of an application that the first terminal has logged out of and a token of an application that the first terminal has not logged out of. The second terminal can log in to the application based on the token of the application that the first terminal has not logged out of. The second terminal cannot log in to the application based on the token of the application that the first terminal has logged out of. It may be understood that the first terminal synchronizes login status information with the second terminal, and a login status of the application on the second terminal may maintain consistent with that on the first terminal based on the synchronized login status information.
In another case, the token sent by the first terminal to the second terminal may be a token of an application that is in applications selected by the user from the application list and that the first terminal has not logged out of. In a specific implementation, when the user logs out of an application server of an application on the first terminal, the first terminal may delete a token of the application, or mark the token of the application, so that the first terminal does not send the token of the application to the second terminal during token synchronization. For example, referring to FIG. 12, a setting interface of the first terminal displays marks indicating whether the first terminal logs out of the applications, so that the user selects an application that the first terminal does not log out of, for example, an application is marked by text "logged out", or an application whose record is displayed in gray, or an application whose selection button cannot be operated. Alternatively, to-be-selected applications displayed on the setting interface of the first terminal are applications that the first terminal does not log out of.
In another case, the token sent by the first terminal to the second terminal may be a currently activated token in tokens of applications selected by the user from the application list. For example, referring to Table 1, for the first application selected by the user, when the first terminal logs in to the application server of the first application by using a plurality of login accounts, the first terminal may maintain a correspondence between a token and working status information that are corresponding to each login account. The working status information is used to identify whether the token is currently activated. The activated token is a token used when the first terminal is last connected to the application server of the first application, and another token corresponding to the first application is inactivated. When the first terminal synchronizes tokens corresponding to the first application with the second terminal, the first terminal may synchronize only the activated token with the second terminal, and the second terminal may automatically log in to the application server based on the token. Alternatively, when the first terminal synchronizes the tokens corresponding to the first application with the second terminal, the first terminal may synchronize the plurality of tokens of the first application and the working status information with the second terminal, and the second terminal may automatically determine the activated token based on the working status information, to log in to the application server based on the activated token. In this way, the user does not need to manually select a token on the second terminal for login.

**Table 1**

| First application | | |
|---|---|---|
| Account | Token | Working status information |
| Account 1 (Tommy) | Token 1 | Inactivated |
| Account 2 (Susan) | Token 2 | Activated |
| ... | ... | ... |

(4) The first terminal sends the token to the second terminal in response to an operation of receiving token request information sent by the second terminal.

For example, after receiving information that is sent by the second terminal and that is used to request to synchronize the token, the first terminal may send the token to the cloud server, and send the token to the second terminal through the cloud server.

In some embodiments, before step 503, the method may further include: The first terminal receives the token request information sent by the second terminal, where the token request information is used to request a token of at least one application, and the at least one application includes the first application. Step 503 may include: The first terminal sends the token of the at least one application to the second terminal, where the token of the at least one application includes the first token.

For example, referring to FIG. 13, a setting interface of the second terminal may include a list of applications used to request to synchronize a token. When sending the token request information, the second terminal may send an identifier of an application selected by the user to the first terminal, to obtain the requested token of the application from the first terminal.

In some other embodiments, as shown in FIG. 14, a synchronization policy list is displayed in a setting interface of the first terminal, so that the user selects, from the synchronization policy list, a target synchronization policy that the user wants to use, to synchronize the token of the application according to the target synchronization policy. A condition of the synchronization policy may be preset in code through hardcoding. Alternatively, after the user selects, from the synchronization policy list, the target synchronization policy that the user wants to use, a configuration file is generated based on the target synchronization policy. This is not specifically limited in this embodiment of this application.

In some embodiments, when the synchronization policy is met, the first token synchronized by the first terminal with the second terminal in step 503 is obtained by the first terminal through a same preset access interface. Before step 503, the first terminal may further store the first token through a same preset storage interface. The same preset access interface is a system-level interface, and may include a same storage interface and a same read interface. The same storage interface may be configured to store a token of at least one application on the first terminal in a system-specified storage location. The same read interface may be configured to: when a token needs to be used, obtain a token of at least one application on the first terminal from a system-specified storage location.

In the prior art, different application vendors implement access of respective tokens, and each application vendor needs to develop corresponding code to access a token. Consequently, costs of development and maintenance are relatively high. In this embodiment of this application, the token of each application is accessed through the same token access interface provided by the first terminal, so that code development and maintenance of each application vendor for accessing the token can be reduced, and costs of each application vendor can be reduced. Specifically, a developer of the first terminal may provide the same token access interface in an SDK API document, so that each application vendor accesses the token of each application through the same access interface.

In addition, in the prior art, tokens of different applications are stored in different locations corresponding to interfaces specified by the applications, and the first terminal cannot learn of an interface and a specific location that are used to store the token of each application. Therefore, token synchronization cannot be implemented. However, in this embodiment of this application, the first terminal may obtain the tokens of the applications through a same interface, to synchronously send the tokens of the applications to another terminal.

In addition, tokens of different applications are stored in different manners with different security levels. Some applications have poor security in token storage and are prone to suffer malicious attacks such as application cloning attacks. For example, some applications store tokens in files, and the tokens are easily obtained by another device. However, in this embodiment of this application, the first terminal does not easily provide the token of the application for the another terminal. The token of the application is provided through the same access interface and is synchronously sent to the another terminal only when the first terminal determines that a condition limited by the synchronization policy is met. Therefore, malicious attacks such as application cloning attacks can be effectively prevented, and security is improved.

Specifically, in this embodiment of this application, referring to FIG. 15, the first terminal may include a same token service module and a same access interface. After obtaining the token, the first terminal may store the token into a token service module through the access interface, and encrypt and store the token through the token service module. When the token needs to be synchronized with another device, the first terminal decrypts the token through the token service module, and then provides the decrypted token for the same access interface. The first terminal reads the token from the same access interface, encrypts the token, and then sends the encrypted token to the another device. In this way, the first terminal can centrally manage storage and synchronization of the tokens of the applications.

In a process of storing the encrypted token, the first terminal may encrypt the token by using an advanced key. For example, the advanced key may be a unique key of each device, for example, may be a key that cannot be learned of by another device, such as a hardware key or a key randomly generated when the first terminal is powered on. The hardware key is a key implemented by using a dedicated encryption chip, an independent processing chip, or the like. For example, the hardware key may be a key on a chip, a key in a system TEE environment, a key in a system SE environment, or the like. In this way, token storage security can be improved, and even if the token is obtained, the token cannot be decrypted. This effectively prevents malicious attacks such as decompilation attacks and improves security.

The following specifically describes a storage process, an encryption process, a decryption process, and a read process of the token.
1. Storage process:
   (1) An upper-layer service application of the first terminal initiates a storage request, and transfers a to-be-stored token into a same storage interface, so that the to-be-stored token arrives at the token service module.
      The to-be-stored token is in a plaintext form. Optionally, the application may specify a value of a token identifier TOKENID, and the value is used for subsequent token extraction. After the first terminal receives a token sent by an application server of an application or a token synchronized by another terminal, the application may initiate a storage request, and the first terminal may store, through the same storage interface to a system-specified storage location, the token sent by the application server or the another terminal. Specifically, in addition to the token, the first terminal may further store a name of the application corresponding to the token, and working status information, TOKENID, and the like corresponding to the token.
   (2) The first terminal obtains a tokenkey. The tokenkey is encrypted and protected based on a hardware key hardwarekey.
      For example, in a first case, the first terminal randomly generates the tokenkey, that is, rand()->tokenkey. The tokenkey is used to encrypt the token, and rand() is a random number generator interface of an entire system, for example, a securerandom interface of Android or a rand_bytes() interface of openssl.
      To ensure security of the tokenkey and further ensure security of the token, the first terminal may store the tokenkey after performing an encryption operation (that is, ENC(hardwarekey, tokenkey) -> E_Tokenkey) on the tokenkey based on the hardwarekey. The ENC is a general name of encryption operations, and a specific algorithm includes but is not limited to AES, DES, 3DES, and the like. A process of the encryption operation includes but is not limited to: directly encrypting the tokenkey by using the hardwarekey; or encrypting an intermediate key by using the hardwarekey, and then encrypting the tokenkey by using the intermediate key. Ciphertext (namely, E_Tokenkey) of the encrypted tokenkey may be stored in a file or a database. This is not specifically limited herein.
      For example, in a second case, the first terminal randomly generates the tokenkey, and the tokenkey is used to encrypt the token. The first terminal may further invoke a hardware-level protection storage interface of the system to perform encrypted storage, to ensure security of the tokenkey, and further ensure security of the token. For example, the first terminal may invoke an Android keystore, or invoke a TEE SFS or the like to perform encrypted storage. This is not specifically limited herein.
      For another example, in a third case, the first terminal may derive the tokenkey based on the hardwarekey, that is, KDF(hardwarekey, df) -> Tokenkey. The tokenkey is used to encrypt the token, and df represents a derived factor, and is usually a character string or numbers. This is not specifically limited herein. For example, if different tokenkeys need to be generated for different applications, df herein may be an identity of an application, for example, a package name or an application ID. The KDF is a general name of derivation operations. Derivation algorithms include but are not limited to using a NIST 800-108 standard. Specifically, a derivation process includes but is not limited to: directly deriving the tokenkey based on the hardwarekey; or deriving an intermediate key based on the kardwarekey, and then deriving the tokenkey based on the intermediate key, or performing derivation and encryption by using the intermediate key. This is not specifically limited herein.
   (3) The first terminal encrypts the token based on the obtained tokenkey.
      An encryption algorithm may be AES, DES, 3DES, or the like. This is not specifically limited herein.
   (4) The first terminal stores the encrypted token.
      The storage location includes but is not limited to a file or a database. This is not specifically limited herein.
   (5) The first terminal stores the TOKENID.
      The first terminal may generate the TOKENID according to a preset algorithm. Specifically, a method for generating the TOKENID includes but is not limited to: randomly generating the TOKENID, obtaining a database index value, and the like. This is not specifically limited herein. In addition, if the application specifies the value of the TOKENID in step (1), the TOKENID specified by the application is stored.
      In addition, the first terminal may further store a correspondence between the TOKENID and the tokenkey.
   (6) If the application does not specify the TOKENID, the first terminal may further return a corresponding TOKENID to the application, and store a correspondence between the application and the TOKENID.
      It should be noted that the foregoing token encryption process is described by using a process of hardwarekey-> tokenkey-> token as an example. To be specific, the tokenkey is encrypted and protected by using the hardwarekey, and the token is encrypted and protected by using the tokenkey. In some other embodiments, the token encryption process may alternatively be hardwarekey -> token. To be specific, the first terminal may directly encrypt and protect the token based on the hardwarekey.
      In some other embodiments, there may be more than one level of tokenkey between the hardwarekey and the token, for example, hardwarekey -> tokenkey_leve1 -> tokenkey_level2 ->... ->token. This is not limited in this embodiment of this application. In addition, other factors may also be introduced to one or more of the foregoing levels. For example, derivation is performed based on a user's password, and a derivation result is combined with a tokenkey of any one of the foregoing levels, and then is used to perform encryption and protection on content of a next level. Derivation functions include but is not limited to PBKDF2, scrypt, and the like.
      It should be further noted that the foregoing encryption process is described by using an example in which the hardware key hardwarekey is used as a protection key, and the hardwarekey may also be replaced with an advanced key that only the first terminal has, such as a key randomly generated during power-on.
2. Read process:
   (1) The upper-layer service application of the first terminal initiates a read request, specifically, invokes a read interface, and transfers a to-be-read TOKENID corresponding to the application to the read interface.
      For example, when the first terminal needs to establish a connection to an application server of an application, to use a service of the application, the first terminal may initiate a read request to obtain a token, and establish the connection to the application server based on the token.
   (2) The first terminal obtains, through the read interface, a ciphertext of a tokenkey corresponding to the TOKENID.
      Alternatively, the foregoing steps (1) and (2) may be replaced with the following: The first terminal initiates a token synchronization service, and obtains, through the read interface based on a TOKENID of a to-be-synchronized token (for example, a token, of an application, specified by a user or requested by the second terminal) of an application, a tokenkey corresponding to the token, of the application, specified by the user or requested by the second terminal.
      Alternatively, the foregoing steps (1) and (2) may be replaced with the following: The first terminal initiates a token synchronization service, and obtains, through the read interface, stored ciphertexts of tokenkeys corresponding to all tokens.
   (3) The first terminal obtains the tokenkey.
      If the tokenkey is generated in the first case in the foregoing storage process and is encrypted and stored based on the hardwarekey, the first terminal may perform corresponding decryption based on the hardwarekey, to obtain the plaintext tokenkey, so as to decrypt the token based on the plaintext tokenkey.
      If the tokenkey is generated in the second case in the foregoing storage process and is encrypted and stored by invoking the hardware-level protection storage interface of the system, the first terminal may obtain the tokenkey through a read interface for hardware-level encryption storage of the system.
      If the tokenkey is generated through derivation based on the hardwarekey in the third case in the foregoing storage process, the first terminal may generate the tokenkey through derivation by using a same method.
   (4) The first terminal decrypts the ciphertext of the token based on the obtained tokenkey, to obtain the plaintext token through the same read interface.

A decryption algorithm corresponds to the encryption algorithm, and may include but is not limited to AES, DES, 3DES, and the like.

After obtaining the token in the plaintext form through decryption, the first terminal may synchronize the token with the second terminal in the foregoing synchronization manner if the synchronization policy is met.

Alternatively, after obtaining the token in the plaintext form through decryption, the first terminal may send the token to the application server of the application for verification, to use the service of the application after establishing a connection to the application server. Specifically, the first terminal may obtain the token through a preset read interface based on the TOKENID, and then send connection request information to the application server of the application. The connection request information includes the token. After the token is verified, the application server sends connection response information to the first terminal. After receiving the connection response information sent by the application server, the first terminal successfully establishes the connection to the application server, and may use the service of the application.

In some embodiments, as shown in FIG. 15, the token service module may include a key generation module, a token encryption and decryption module, a token storage module, a synchronization module, a system hardware module, and the like. The key generation module may be configured to generate a key for encrypting a token. The token encryption and decryption module may be configured to encrypt and decrypt a stored token based on a key. The synchronization module may be configured to manage a synchronization policy and a synchronization manner. The system hardware module may be configured to provide a hardware-level key or a hardware-level protection storage interface.

It can be learned from the foregoing that, in the token sending method provided in the foregoing embodiment of this application, the first terminal may actively initiate token synchronization, or the second terminal may request the first terminal to synchronize a token. The first terminal may synchronize the token in the foregoing synchronization manner when the foregoing synchronization policy is met. The token synchronized by the first terminal with the second terminal may be a token of an application that the first terminal does not log out of, an activated token, or the like. The first terminal may further synchronize a token with a terminal specified by the user.

Another embodiment of this application provides a login method, and the login method may be applied to a second terminal. The second terminal does not log in to an application server of a first application currently. Referring to FIG. 5, the method may include the following steps.

1601. The second terminal receives a first token of the first application that is sent by a first terminal, where the first token is a credential that is sent by the application server to the first terminal and that allows login to the application server.

The first token received by the second terminal from the first terminal may be a token that is sent by the application server to the first terminal in step 502 and that allows login to the application server when the first terminal requests to log in to the application server, and is a credential that allows login and a connection to the application server.

1602. The second terminal automatically sends login request information to the application server, where the login request information includes the first token.

After receiving the first token sent by the first terminal, the second terminal may directly send the first token to the application server for verification, to request to log in to the application server of the first application.

1603. The second terminal receives login success response information sent by the application server.

The first token sent by the second terminal to the application server is sent by the application server to the first terminal after the application server verifies an account and a password that are sent by the first terminal. After receiving the first token sent by the second terminal, the application server may determine that the first token is a valid token. Therefore, the application server can send the login success response information to the second terminal.

In this solution, the second terminal may directly request, based on the first token sent by the first terminal, to log in to the application server of the first application corresponding to the first token, a user does not need to enter information such as a password on the second terminal, and the second terminal does not need to send the information such as the password to the application server. Therefore, entering operations of the user can be reduced, and the second terminal can quickly log in to the application server of the first application automatically.

After step 1603, when the user wants to use a service of the first application on the second terminal, the second terminal may further establish a connection to the first application based on the first token, to use the service of the first application.

In some embodiments, step 1602 may specifically include: The second terminal automatically sends the login request information to the application server after detecting an operation of accessing the first application by the user, where the login request information includes the first token. For example, referring to in FIG. 4B-1 and FIG. 4B-2, the second terminal automatically sends a token of WeChat to a WeChat application server after detecting an operation of tapping a WeChat icon by the user.

In some other embodiments, referring to FIG. 16A, after step 1601, the method may further include the following steps.

1604. The second terminal sends second prompt information to the first terminal, where the second prompt information is used to indicate that the second terminal receives the first token.

After receiving the first token sent by the first terminal, the second terminal may send the second prompt information to the first terminal, so that the user learns, through the first terminal, that the second terminal has received the first token.

1605. If the second terminal receives suspension information sent by the first terminal or the application server, the second terminal displays a login interface in response to an operation of accessing the first application by the user.

After the second terminal sends the second prompt information to the first terminal, if the second terminal receives the suspension information sent by the first terminal or the application server, the second terminal displays the login interface in response to the operation of accessing the first application by the user, to prompt the user to enter login information such as a login account, a password, or a fingerprint, and the second terminal does not automatically send the first token to the application server.

In addition, after the second terminal sends the second prompt information to the first terminal, if the second terminal does not receive the suspension information sent by the first terminal or the application server, the second terminal sends the first token to the application server after detecting the operation of accessing the first application by the user.

In some other embodiments, referring to FIG. 16B, after step 1602, the method may further include the following step.

1606. The second terminal sends third prompt information to the first terminal, where the third prompt information is used to indicate that the second terminal is performing a login operation by using the first token.

After sending the first token to the application server, the second terminal may send the third prompt information to the first terminal, to remind, on the first terminal, the user that the second terminal is performing a login operation by using the first token. In addition to a sending occasion shown in FIG. 16B, the third prompt information may alternatively be sent after step 1601 and before step 1602 (a preferred solution), or may be sent after step 1602 and before step 1608, or may be sent simultaneously with fourth prompt information in step 1608.

In some other embodiments, after step 1606, the second terminal may perform step 1603 or the following step 1607.

1607. The second terminal receives login failure response information sent by the application server.

After the user learns of the third prompt message through the first terminal, if the user does not want the second terminal to log in to the application server by using the first token, the first terminal may send an indication message to the application server, to indicate the application server to forbid the second terminal to log in to the application server based on the first token. In this case, the application server may send the login failure response information to the second terminal, to notify the second terminal that the login fails. In this way, when determining that the second terminal is an unauthorized device, the user may forbid the second terminal to log in to the application server by using the first token sent by the first terminal. After receiving the login failure response information, the second terminal may further send or forward, to the first terminal, a message indicating a login failure.

After the user learns of the third prompt message through the first terminal, if the user wants the second terminal to log in to the application server by using the first token, the first terminal may send login permission indication information to the second terminal. Alternatively, the first terminal does not perform a forbidding action, and allows the second terminal to log in to the application server. The application server sends the login success response information to the second terminal based on the first token sent by the second terminal, and the second terminal performs step 1603.

Both the second prompt information sent by the second terminal in step 1604 and the third prompt information sent by the second terminal in step 1606 may be the first prompt information received by the first terminal in step 505.

In some other embodiments, referring to FIG. 16B, after step 1602, the method may further include the following step.

1608. The second terminal displays fourth prompt information, where the fourth prompt information indicates that the second terminal is performing a login operation by using the first token.

After the second terminal sends the login request information to the application server, the user may learn, through the second terminal by using the fourth prompt information, that the second terminal is currently performing a login operation by using the first token. For example, after displaying the interface shown in FIG. 4B-1 and before displaying the interface shown in FIG. 4B-2, the second terminal may further display fourth prompt information 1701 shown in FIG. 17.

In some embodiments, before step 1601, the method may further include: The second terminal sends token request information to the first terminal, where the token request information is used to request to obtain a token of at least one application, and the at least one application includes the first application. For example, referring to FIG. 13, the user may select a plurality of applications, and the second terminal may indicate, by using the token request information, the plurality of applications selected by the user to the first terminal, so that the first terminal sends tokens of the plurality of applications selected by the user to the second terminal.

In some other embodiments, the first application is not installed on the second terminal, and step 1601 may specifically include: The second terminal receives an installation package and the first token of the first application (user data may also be sent at the same time) that are sent by the first terminal. Based on this, before the second terminal automatically sends the login request information to the application server, the second terminal may further install the first application based on the installation package of the first application (and also load the user data). Then, the second terminal automatically sends the login request information to the application server, or after detecting the operation of accessing the first application by the user, the second terminal sends the login request information to the application server. To be specific, the first terminal can quickly clone a login status and data information of an application to the second terminal. Alternatively, the first terminal sends, to the second terminal based on a user indication, layout layout information, installation packages, user data, and one or more tokens stored in the first terminal that are of all applications on a home screen of the first terminal, so that the second terminal can install the applications based on the layout information, the installation packages, and the user data, and the one or more tokens stored in the first terminal, and display the applications installed on the second terminal in a layout the same as that of the first terminal. Therefore, the second terminal can automatically log in to one or more corresponding applications based on the received one or more tokens, and a login status of an application displayed on the second terminal is also consistent with that on the first terminal.

The user data is data generated based on an operation, a setting, or a behavior of a user, for example, a comment on Weibo or a WeChat chat message. When the first terminal also synchronizes the user data with the second terminal, content displayed after the second terminal logs in to the application server of the application based on the first token may be consistent with content currently displayed after the first terminal logs in to the application server. For example, after the second terminal logs in to Weibo, an application server of Weibo may send, to the second terminal, related application data (for example, a comment on Weibo) of an account that the first terminal logs in to, so that content displayed on the second terminal is consistent with content displayed on the first terminal.

In some other embodiments, the first application is not installed on the second terminal, and the second terminal may log in to the first application by using the first token after the user subsequently installs the application.

In some other embodiments, the first application is not installed on the second terminal. After receiving the first token sent by the first terminal, the second terminal queries the user whether to download the application. After the user indicates to download the application, the second terminal downloads the first application, and logs in to the first application based on the first token.

In some other embodiments, the first application is not installed on the second terminal, and after receiving the first token sent by the first terminal, the second terminal may automatically download and install the application, and automatically log in to the application based on the first token.

In addition, in some other embodiments, in a scenario other than a new machine replacement scenario, a token sent by the application server to the terminal may carry time information. After both the first terminal and the second terminal log in to the application server of the first application, the application server may send an updated token and updated time information to the first terminal and the second terminal. When the second terminal receives a plurality of tokens of the application from the application server and another terminal, the second terminal may connect to the application server of the application by using a token whose time information is a latest time value. In addition, the second terminal may further delete a token with an earlier time value. For example, for a correspondence between a token and time information corresponding to an application that are received by the second terminal, refer to Table 2.

**Table 2**

| Current device | Applications | Token source | Time information |
|---|---|---|---|
| Second terminal | First application | Application server | 2018-7-25; 21:05:25 |
| | | First terminal | 2018-7-26; 18:05:25 |
| | | Third terminal | 2018-7-8; 09:58:43 |
| | ... | ... | |

In some other embodiments, the first terminal stores a correspondence between a type of a device and a preset application, and the first terminal may synchronize, with the second terminal, a token of a preset application corresponding to a type to which the second terminal belongs. For example, the first terminal is a mobile phone, the second terminal is smart glasses, and the first terminal stores a correspondence between the smart glasses and a map application. Therefore, when a synchronization policy is met, the first terminal may synchronize a token of the map application with the second terminal in the synchronization manner described in the foregoing embodiment.

In some other embodiments, only a few applications are supported by the second terminal, and the second terminal may request the first terminal to synchronize tokens of all the applications supported by the second terminal. For example, the smart glasses support only the map application, and the smart glasses may request a token of the map application through the mobile phone.

In some other embodiments, the first terminal and the second terminal are devices that support a token interaction interface and the foregoing same storage interface. In some embodiments, the first terminal and the second terminal may be devices of a same vendor, or devices of a same vendor and a same model. These devices support a token interaction interface and the foregoing same storage interface. Before sending a token to the second terminal, the first terminal may confirm with the second terminal whether the token interaction interface and the same storage interface are supported. If the token interaction interface and the same storage interface are supported, the first terminal sends the token to the second terminal.

In some other embodiments, the token sent by the first terminal to the second terminal is a token of an application preinstalled when the first terminal is delivered from a factory (or before the first terminal is powered on).

Some other embodiments of this application further provide a login method, which may be applied to a system including an application server, a first terminal, and a second terminal. For a schematic structural diagram of the system, refer to FIG. 2. The first terminal in the system may perform steps 501 to 506 performed by the first terminal in FIG. 5 or FIG. 6. The second terminal in the system may perform steps 1601 to 1608 performed by the second terminal in FIG. 5, FIG. 16A, and FIG. 16B. Details are not described herein again.

It may be understood that, to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use a different method to implement the described functions for each particular application, but it should not be considered that the implementation goes beyond the scope of this application.

In the embodiments, the electronic device may be divided into function modules based on the example in the foregoing method. For example, each function module corresponding to each function may be obtained through division, or two or more functions may be integrated into one processing module. The integrated module may be implemented in the form of hardware. It should be noted that, in the embodiments, division into the modules is an example, and is merely a logical function division. In an actual implementation, another division manner may be used.

When each function module is obtained through division based on each corresponding function, FIG. 18 is a possible schematic diagram of composition of a first terminal 1800 in the foregoing embodiment. As shown in FIG. 18, the first terminal 1800 may include a sending unit 1801, a receiving unit 1802, and a processing unit 1803.

The sending unit 1801 may be configured to support the first terminal 1800 in performing step 501, step 503, step 504B, step 506, and/or another process of the technology described in this specification.

The receiving unit 1802 may be configured to support the first terminal 1800 in performing step 502, step 505, and/or another process of the technology described in this specification.

The processing unit 1803 may be configured to support the first terminal 1800 in performing step 504A, indicating the sending unit 1801 to perform the steps and the like, and/or performing another process of the technology described in this specification.

It should be noted that all related content of the steps in the foregoing method embodiments may be cited in function descriptions of corresponding function modules. Details are not described herein again.

The first terminal 1800 provided in this embodiment is configured to perform the foregoing token sending method. Therefore, effects that are the same as those of the foregoing implementation method can be achieved.

When an integrated unit is used, the first terminal 1800 may include a processing module, a storage module, and a communications module. The processing module may be configured to control and manage an action of the first terminal 1800, for example, may be configured to support the first terminal 1800 in performing the steps performed by the processing unit 1803. The storage module may be configured to support the first terminal 1800 in storing a token of an application, program code, data, and the like. The communications module may be configured to support the first terminal 1800 in communicating with another device, for example, may be configured to support the first terminal 1800 in performing the steps performed by the sending unit 1801 and the receiving unit 1802.

When each function module is obtained through division based on each corresponding function, FIG. 19 is a possible schematic diagram of composition of a second terminal 1900 in the foregoing embodiment. As shown in FIG. 19, the second terminal 1900 may include a receiving unit 1901, a sending unit 1902, a display unit 1903, and a processing unit 1904.

The receiving unit 1901 may be configured to support the second terminal 1900 in performing step 1601, step 1603, step 1607, and/or another process of the technology described in this specification.

The sending unit 1901 may be configured to support the second terminal 1900 in performing step 1602, step 1604, step 1606, and/or another process of the technology described in this specification. The processing unit 1904 may be configured to indicate the sending unit 1901 of the second terminal 1900 to perform these steps.

The display unit 1903 may be configured to support the second terminal 1900 in performing step 1605, step 1608, and/or another process of the technology described in this specification. The processing unit 1904 may be configured to indicate the display unit 1903 of the second terminal 1900 to perform these steps.

It should be noted that all related content of the steps in the foregoing method embodiments may be cited in function descriptions of corresponding function modules. Details are not described herein again.

The second terminal 1900 provided in this embodiment is configured to perform the foregoing notification message processing method. Therefore, effects that are the same as those of the foregoing implementation method can be achieved.

When an integrated unit is used, the second terminal 1900 may include a processing module, a storage module, and a communications module. The processing module may be configured to control and manage an action of the second terminal 1900, for example, may be configured to support the second terminal 1900 in performing the steps performed by the display unit 1903 and the processing unit 1904. The storage module may be configured to support the second terminal 1900 in storing a token of a first application, program code, data, and the like. The communications module may be configured to support the second terminal 1900 in communicating with another device, for example, may be configured to support the second terminal 1900 in performing the steps performed by the receiving unit 1901 and the sending unit 1902.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a digital signal processor (digital signal processing, DSP) and a microprocessor. The storage module may be a memory. The communications module may be specifically a radio frequency circuit, a Bluetooth chip, a Wi-Fi chip, or another device that interacts with another electronic device.

In an embodiment, when the processing module is the processor and the storage module is the memory, the first terminal or the second terminal in the embodiments may be an electronic device having the structures shown in FIG. 3A and FIG. 3B.

An embodiment of this application further provides a computer storage medium. The computer storage medium stores a computer instruction. When the computer instruction is run on an electronic device, the electronic device is enabled to perform the related method steps, to implement the token sending method in the foregoing embodiments.

An embodiment of this application further provides a computer program product. When the computer program product is run on a computer, the computer is enabled to perform the foregoing related steps, to implement the token sending method in the foregoing embodiments.

In addition, an embodiment of this application further provides an apparatus. The apparatus may be specifically a chip, a component, or a module. The apparatus may include a processor and a memory that are connected to each other. The memory is configured to store a computer executable instruction, and when the apparatus runs, the processor may execute the computer executable instruction stored in the memory, so that the chip performs the token sending method in the foregoing method embodiments.

An embodiment of this application further provides a computer storage medium. The computer storage medium stores a computer instruction. When the computer instruction is run on an electronic device, the electronic device is enabled to perform the related method steps, to implement the login method in the foregoing embodiments.

An embodiment of this application further provides a computer program product. When the computer program product is run on a computer, the computer is enabled to perform the foregoing related steps, to implement the login method in the foregoing embodiments.

In addition, an embodiment of this application further provides an apparatus. The apparatus may be specifically a chip, a component, or a module. The apparatus may include a processor and a memory that are connected to each other. The memory is configured to store a computer executable instruction, and when the apparatus runs, the processor may execute the computer executable instruction stored in the memory, so that the chip performs the login method in the foregoing method embodiments.

The electronic device, the computer storage medium, the computer program product, or the chip provided in the embodiments may be configured to perform the corresponding methods provided above. Therefore, for beneficial effects that can be achieved, refer to the beneficial effects of the corresponding methods provided above. Details are not described herein again.

The foregoing descriptions about implementations allow a person skilled in the art to understand that, for convenient and brief description, division into the foregoing function modules is taken as an example for description. In actual application, the foregoing functions can be allocated to different modules and implemented according to a requirement, in other words, an inner structure of an apparatus is divided into different function modules to implement all or some of the functions described above.

In the several embodiments provided in this application, it should be understood that the disclosed apparatuses and methods may be implemented in other manners. For example, the described apparatus embodiment is merely an example. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected based on actual requirements to achieve the obj ectives of the solutions of the embodiments.

In addition, function units in the embodiments of this application may be integrated into one processing unit, or each of the units may exist alone physically, or two or more units are integrated into one unit. The integrated unit may be implemented in the form of hardware, or may be implemented in the form of a software function unit.

When the integrated unit is implemented in the form of a software function unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium, and includes several instructions for instructing a device (which may be a single-chip microcomputer, a chip, or the like) or a processor (processor) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A token sending method, comprising:
sending, by a first terminal, login request information to an application server of a first application, wherein the login request information comprises a login account and a password for logging in to the application server;
receiving, by the first terminal, a first token for logging in to the application server that is sent by the application server; and
sending, by the first terminal, the first token to a second terminal, so that the second terminal automatically logs in to the application server by the first token.

2. The method according to claim 1, wherein the sending, by the first terminal, the first token to a second terminal specifically comprises:
informing, by the first terminal, a user that the first token is to be sent to the second terminal, and/or verifying user permission; and
sending, by the first terminal, the first token to the second terminal after user confirmation is obtained and/or the user permission is verified.

3. The method according to claim 1 or 2, wherein after the sending, by the first terminal, the first token to a second terminal, the method further comprises:
receiving, by the first terminal, first prompt information sent by the second terminal or the application server, wherein the first prompt information is used to indicate that the second terminal receives the first token and/or the second terminal is performing a login operation by using the first token; and
sending, by the first terminal, suspension information to the second terminal or the application server based on a user indication, so that the second terminal cannot log in to the application server by using the first token.

4. The method according to any one of claims 1 to 3, wherein the sending, by the first terminal, the first token to a second terminal comprises:
sending, by the first terminal, a token of at least one application to the second terminal in response to an indication operation of the user, wherein the token of the at least one application comprises the first token of the first application.

5. The method according to any one of claims 1 to 3, wherein before the sending, by the first terminal, the first token to a second terminal, the method further comprises:
receiving, by the first terminal, token request information sent by the second terminal, wherein the token request information is used to request a token of at least one application, and the at least one application comprises the first application; and
the sending, by the first terminal, the first token to a second terminal comprises:
sending, by the first terminal, the token of the at least one application to the second terminal, wherein the token of the at least one application comprises the first token.

6. The method according to any one of claims 1 to 5, wherein before the sending, by the first terminal, the first token to a second terminal, the method further comprises:
storing, by the first terminal, the first token through a preset storage interface, wherein the preset storage interface is used to store the token of the at least one application on the first terminal; and
the sending, by the first terminal, the first token to a second terminal comprises:
obtaining, by the first terminal, the first token through a preset read interface, wherein the preset read interface is used to read the token of the at least one application on the first terminal; and
sending, by the first terminal, the first token to the second terminal.

7. The method according to claim 6, wherein the storing, by the first terminal, the first token through a preset storage interface comprises:
transferring, by the first terminal, the first token to the preset storage interface;
encrypting, by the first terminal, the first token based on a first key, wherein the first key is a hardware key, or the first key is a key that is randomly generated after the first terminal is powered on; and
storing, by the first terminal, the encrypted first token.

8. The method according to any one of claims 1 to 7, wherein the sending, by the first terminal, the first token to a second terminal comprises:
sending, by the first terminal, the first token to the second terminal through at least one of a direct connection, a cloud server, a near field communication network, or an external mediation device.

9. A login method, applied to a second terminal, wherein the second terminal does not log in to an application server of a first application currently, and the method comprises:
receiving, by the second terminal, a first token of the first application that is sent by a first terminal, wherein the first token for logging in to the application server is a credential that is sent by the application server to the first terminal;
automatically sending, by the second terminal, login request information to the application server, wherein the login request information comprises the first token; and
receiving, by the second terminal, login success response information sent by the application server.

10. The method according to claim 9, wherein after the receiving, by the second terminal, a first token of the first application that is sent by a first terminal, the method further comprises:
sending, by the second terminal, second prompt information to the first terminal, wherein the second prompt information is used to indicate that the second terminal receives the first token; and
if the second terminal receives suspension information sent by the first terminal or the application server, displaying, by the second terminal, a login interface in response to an operation of accessing the first application by a user.

11. The method according to claim 9 or 10, wherein after the automatically sending, by the second terminal, login request information to the application server, the method further comprises:
sending, by the second terminal, third prompt information to the first terminal, wherein the third prompt information is used to indicate that the second terminal is performing a login operation by using the first token.

12. The method according to any one of claims 9 to 11, wherein after the automatically sending, by the second terminal, login request information to the application server, the method further comprises:
displaying, by the second terminal, fourth prompt information, wherein the fourth prompt information indicates that the second terminal is performing a login operation by using the first token.

13. The method according to any one of claims 9 to 12, wherein the receiving, by the second terminal, a first token of the first application that is sent by a first terminal comprises:
receiving, by the second terminal, an installation package, user data, and the first token of the first application that are sent by the first terminal; and
before the automatically sending, by the second terminal, login request information to the application server, the method further comprises:
installing, by the second terminal, the first application based on the installation package of the first application.

14. The method according to any one of claims 9 to 13, wherein before the receiving, by the second terminal, a first token of the first application that is sent by a first terminal, the method further comprises:
sending, by the second terminal, token request information to the first terminal, wherein the token request information is used to request a token of at least one application, and the at least one application comprises the first application.

15. An electronic device, comprising:
a processing unit, configured to: indicate to send login request information to an application server of a first application, wherein the login request information comprises a login account and a password for logging in to the application server; and indicate to send a first token to another electronic device, wherein the first token for logging in to the application server is a credential that is received by the electronic device from the application server;
a sending unit, configured to send the login request information to the application server according to the indication of the processing unit; and
a receiving unit, configured to receive the first token sent by the application server, wherein
the sending unit is further configured to send the first token to the another electronic device according to the indication of the processing unit, so that the another electronic device automatically logs in to the application server by using the first token.

16. The electronic device according to claim 15, wherein the processing unit is further configured to:
inform a user that the first token is to be sent to the another electronic device, and/or verify user permission; and
the sending unit is specifically configured to send, by the electronic device, the first token to the another electronic device after user confirmation is obtained and/or the user permission is verified.

17. The electronic device according to claim 15 or 16, wherein the receiving unit is further configured to:
after the sending unit sends the first token to the another electronic device, receive first prompt information sent by the another electronic device or the application server, wherein the first prompt information is used to indicate that the another electronic device receives the first token and/or the another electronic device is performing a login operation by using the first token; and
the sending unit is further configured to send suspension information to the another electronic device or the application server based on a user indication, so that the another electronic device cannot log in to the application server by using the first token.

18. The electronic device according to any one of claims 15 to 17, wherein the sending unit is specifically configured to:
send a token of at least one application to the another electronic device in response to an indication operation of the user, wherein the token of the at least one application comprises the first token of the first application.

19. The electronic device according to any one of claims 15 to 17, wherein the receiving unit is further configured to:
before the sending unit sends the first token to the another electronic device, receive token request information sent by the another electronic device, wherein the token request information is used to request a token of at least one application, and the at least one application comprises the first application; and
the sending unit is specifically configured to send the token of the at least one application to the another electronic device, wherein the token of the at least one application comprises the first token.

20. The electronic device according to any one of claims 15 to 19, further comprising:
a storage unit, configured to store the first token through a preset storage interface, wherein the preset storage interface is used to store the token of the at least one application on the electronic device, wherein
the sending unit is specifically configured to: obtain the first token through a preset read interface, wherein the preset read interface is used to read the token of the at least one application on the electronic device, and send the first token to the another electronic device.

21. The electronic device according to claim 20,
wherein the storage unit is specifically configured to:
transfer the first token to the preset storage interface;
encrypt the first token based on a first key, wherein the first key is a hardware key, or the first key is a key that is randomly generated after the electronic device is powered on; and
store the encrypted first token.

22. The electronic device according to any one of claims 15 to 21, wherein the sending unit is specifically configured to:
send the first token to the another electronic device through at least one of a direct connection, a cloud server, a near field communication network, or an external mediation device.

23. An electronic device, comprising:
a processing unit, configured to: after a first token of a first application that is sent by another electronic device is received, indicate to send login request information to an application server of the first application, wherein the login request information comprises the first token, and the first token for logging in to the application server is a credential that is sent by the application server to the another electronic device ;
a sending unit, configured to send the login request information to the application server according to the indication of the processing unit; and
a receiving unit, configured to: receive the first token, and receive login success response information sent by the application server.

24. The electronic device according to claim 23, wherein the sending unit is further configured to:
send second prompt information to the another electronic device after the receiving unit receives the first token of the first application that is sent by the another electronic device, wherein the second prompt information is used to indicate that the electronic device receives the first token; and
the electronic device further comprises a first display unit, configured to display a login interface in response to an operation of accessing the first application by a user, if the receiving unit receives suspension information sent by the another electronic device or the application server.

25. The electronic device according to claim 23 or 24, wherein the sending unit is further configured to:
send third prompt information to the another electronic device after automatically sending the login request information to the application server, wherein the third prompt information is used to indicate that the electronic device is performing a login operation by using the first token.

26. The electronic device according to any one of claims 23 to 25, further comprising:
a second display unit, configured to display fourth prompt information after the sending unit automatically sends the login request information to the application server, wherein the fourth prompt information indicates that the electronic device is performing a login operation by using the first token.

27. The electronic device according to any one of claims 23 to 26, wherein the receiving unit is specifically configured to:
receive an installation package, user data, and the first token of the first application that are sent by the another electronic device; and
the electronic device further comprises an installation unit, configured to: before the sending unit automatically sends the login request information to the application server, install the first application based on the installation package of the first application.

28. The electronic device according to any one of claims 23 to 27, wherein the sending unit is further configured to:
send token request information to the another electronic device before the receiving unit receives the first token of the first application that is sent by the another electronic device, wherein the token request information is used to request to obtain a token of at least one application, and the at least one application comprises the first application.

29. A system, wherein the system comprises the electronic device according to any one of claims 15 to 22 and the electronic device according to any one of claims 23 to 28.

30. An electronic device, comprising a touchscreen, a memory, one or more processors, a plurality of applications, and one or more programs, wherein the one or more programs are stored in the memory, and when the one or more processors execute the one or more programs, the electronic device is enabled to perform the token sending method according to any one of claims 1 to 8.

31. A computer program product comprising an instruction, wherein when the computer program product is run on an electronic device, the electronic device is enabled to perform the token sending method according to any one of claims 1 to 8.

32. A computer readable storage medium, comprising an instruction, wherein when the instruction is run on an electronic device, the electronic device is enabled to perform the token sending method according to any one of claims 1 to 8.

33. An electronic device, comprising a touchscreen, a memory, one or more processors, a plurality of applications, and one or more programs, wherein the one or more programs are stored in the memory, and when the one or more processors execute the one or more programs, the electronic device is enabled to perform the login method according to any one of claims 9 to 14.

34. A computer program product comprising an instruction, wherein when the computer program product is run on an electronic device, the electronic device is enabled to perform the login method according to any one of claims 9 to 14.

35. A computer readable storage medium, comprising an instruction, wherein when the instruction is run on an electronic device, the electronic device is enabled to perform the login method according to any one of claims 9 to 14.
